# EUROPEAN PATENT APPLICATION

(11) **EP 1 696 416 A2**
(43) Date of publication of application: **30.08.2006**
(21) Application number: 06250927.8
(22) Date of filing: 21.02.2006
(51) Int. Cl.: G09G 3/36

(54) **Display device, and large-sized display apparatus emloying the same**

(30) Priority: 24.02.2005 JP 2005049719
(71) Applicant: NEC Display Solutions Ltd, Minatoku Tokyo (JP)
(72) Inventor: Wakabayashi, Toshitsugu, Minatoku Tokyo (JP); Arakawa, Yasuhiro, Minatoku Tokyo (JP)
(74) Representative: Whitlock, Holly Elizabeth Ann

(57) **Abstract**

The present invention provides a display device capable of alleviating afterimage phenomena or, even in the event of the occurrence of afterimages, reducing the visibility thereof, and also provides a large-sized display apparatus employing the same. A non-self-luminous display device includes an image changing unit (image scaling-down processing circuit and image scaling up processing circuit) for optionally changing the size of a displayed image, and an image moving unit (frame memory writing control circuit and frame memory readout control circuit) for moving the position of the displayed image which has been changed in size by the image changing unit (image scaling-down processing circuit and image scaling-up processing circuit), on the display region, at predetermined time intervals.

## Description

### BACKGROUND OF THE INVENTION

### Field of the Invention

The present invention relates to display devices and a large-sized display apparatus employing the same. More particularly, the present invention relates to non-self-luminous display devices such as liquid crystal display devices, and a large-sized display apparatus employing the same.

### Description of the Background Art

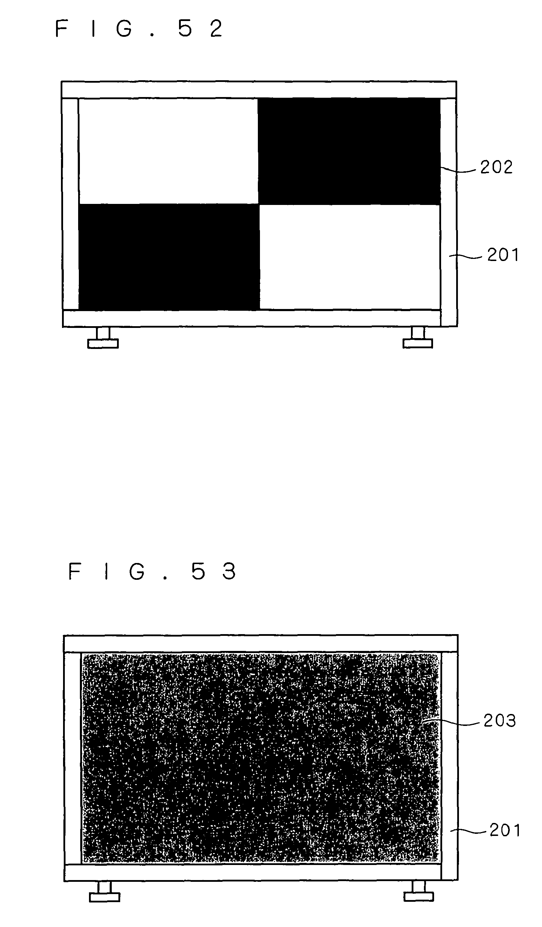

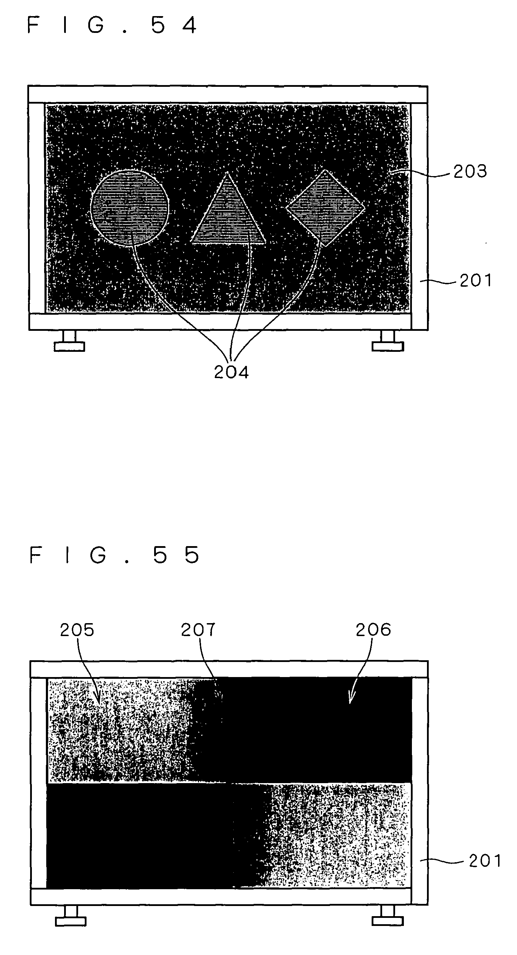

Fig. 52 illustrates a conventional display device (particularly, a liquid crystal device of a non-self-luminous type) displaying a still image. In Fig. 52, there is displayed a flag checker image 202 on the display device 201, wherein the flag checker image 202 is constituted by white and black images dividing the image into four parts. Fig. 53 illustrates the conventional display device 201 displaying a gray single-colored image 203 over the entire screen thereof. Fig. 54 illustrates the conventional display device 201 displaying an image 204 constituted by middle tone colors on a background of the gray single-colored image 203. The image 204 constituted by middle tone colors illustrated in Fig. 54 is constituted by a circle of a red medium color, a triangle of a green medium color and a rectangle of a blue medium color.

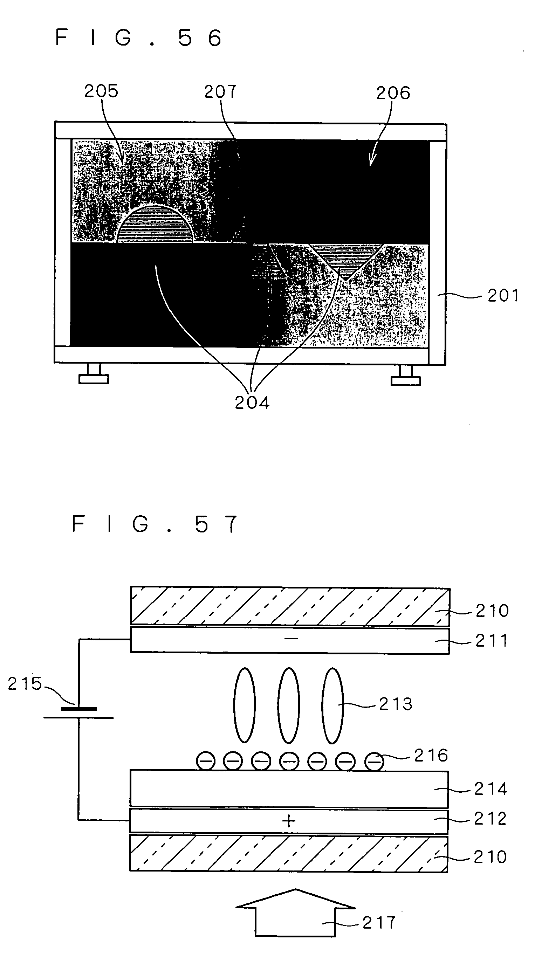

In general, when the gray single-colored image 203 is displayed after the flag checker image 202 of Fig. 52 is displayed on the display device 201, the gray single-colored image 203 is displayed as in Fig. 53. However, when the gray single-colored image 203 constituted by middle tones illustrated in Fig. 53 is displayed after the flag checker image 202 having a higher displayed image contrast as in Fig. 52 is displayed for a long time on the display device 201, the gray single-colored image 203 is affected by the previously displayed flag checker image 202 as illustrated in Fig. 55. More specifically, in Fig. 55, there are displayed, as afterimages, a plain afterimage 205 caused by the white image of the flag checker image 202, a plain afterimage 206 caused by the black image of the flag checker image 202 and a boundary afterimage 207 caused by the boundary between the white and black of the flag checker image 202.

Similarly, when the image 204 constituted by middle tone colors illustrated in Fig. 54 is displayed after the flag checker image 202 of Fig. 52 is displayed for a long time, the image 204 constituted by middle tone colors is affected by the previously displayed flag checker image 202, as illustrated in Fig. 56. More specifically, in Fig. 56, there are displayed, as afterimages, a plain afterimage 205 caused by the white image of the flag checker image 202, a plain afterimage 206 caused by the black image of the flag checker image 202 and a boundary afterimage 207 caused by the boundary between the white and black of the flag checker image 202.

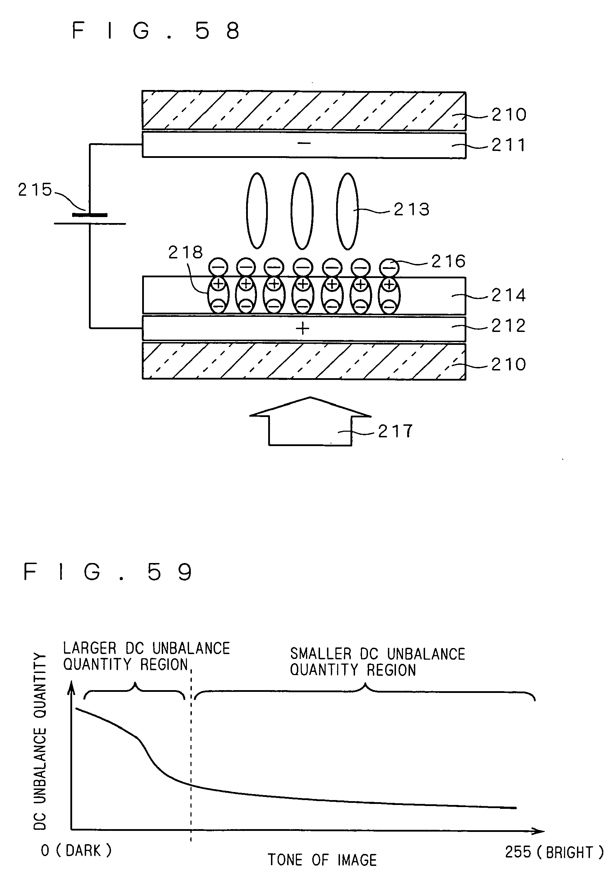

The aforementioned displays are caused by afterimage phenomena. Fig. 57 illustrates the mechanism of the occurrence of afterimage phenomena. A display device illustrated in Fig. 57 includes an opposing common electrode 211 formed on a grass substrate 210, a pixel electrode 212 formed on a grass substrate 210 faced with the opposing common electrode 211 and a liquid crystal layer 213 interposed between the opposing common electrode 211 and the pixel electrode 212. Further, the display device illustrated in Fig. 57 includes an orientation layer 214 for controlling the orientation of the liquid crystal molecules which is formed on the pixel electrode 212. Although the liquid crystal display device further includes an orientation layer formed on the opposing common electrode 211, illustration thereof is omitted in Fig. 57. The opposing common electrode 211 and the pixel electrode 212 are made of ITO (Indium Tin Oxide) which is a transparent electrode material.

Generally, a non-self-luminous display device such as a liquid crystal display device employs, as a driving method, an AC driving which applies no DC bias to the liquid crystal molecules. However, even though an AC driving is employed, a DC unbalance 215 as illustrated in Fig. 57 is applied to the display device, due to various factors. Such a DC unbalance 215 generates an electric field between the opposing common electrode 211 and the pixel electrode 212, thus resulting in a concentration of charged ions (impurities) 216 within the liquid crystal layer 213 along the electrode surface, due to the influence of the electric field. In Fig. 57, charged ions 216 are concentrated on the orientation layer 214 on the pixel electrode 212.

The concentrated charged ions 216 affect the electric field which is applied, by the driving, to the liquid crystal layer 213. This induces an afterimage phenomenon which changes the light output of the display device, in the region in which charged ions 216 are concentrated. In the case of a transparent type display device, this will affect the transmittance for the backlight 217.

Further, if an electric field is kept applied in a single direction between the opposing common electrode 211 and the pixel electrode 212 which hold the liquid crystal layer 213 therebetween, this will cause polarization of the orientation layer 214 which is an insulating material. Fig. 58 illustrates polarization 218 of the orientation layer 214 on the pixel electrode 212. If the orientation layer 214 which is an insulating material is polarized, the orientation layer 214 is not easily restored and, consequently, charged ions 216 are trapped at the surface of the polarized orientation layer 214. The orientation layer 214 strikes an electrical balance by trapping charged ions 216. The trapped charged ions 216 affect the electric field which is being applied, by driving, to the liquid crystal layer 213, thereby inducing an afterimage phenomenon.

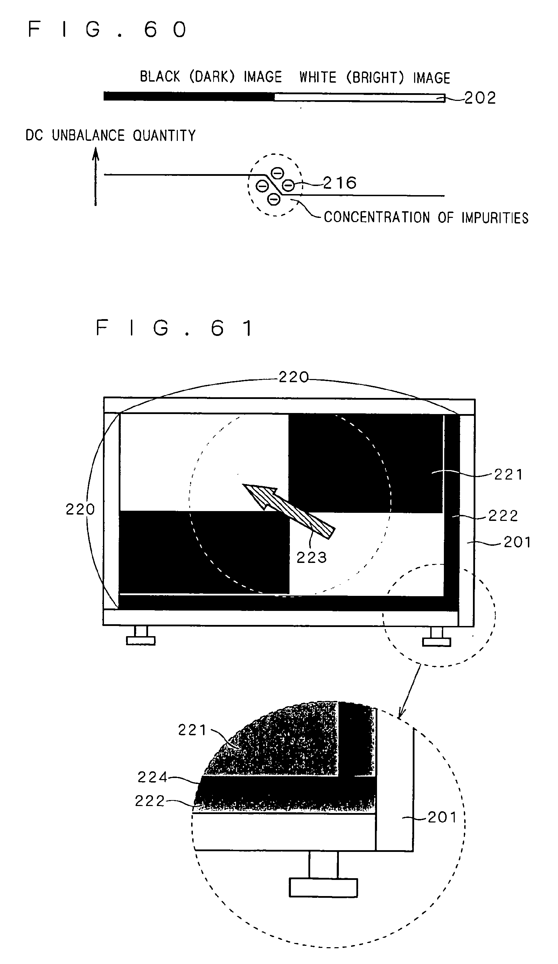

Fig. 59 illustrates the DC unbalance quantity with respect to the tone of a displayed image. Fig. 59 illustrates that the DC unbalance quantity varies with the tone of the displayed image. More specifically, there is a greater DC unbalance quantity in a lower tone region of the image while there is a smaller DC unbalance quantity in a higher tone region. Here, the region from 0 tone (dark) to a predetermined tone will be referred to as a greater DC unbalance quantity region, and the tone region corresponding to the greater DC unbalance quantity region will be referred to as a lower tone region, in the present specification. Further, the region from the predetermined tone to 255 tones (bright) is a smaller DC unbalance quantity region.

Fig. 60 illustrates the concentration of impurities at a boundary region in a displayed image. At a boundary region having a high contrast (tone difference) in a displayed image such as the flag checker image 202, there is induced a difference between the DC unbalance quantity of a black image and the DC unbalance quantity of a white image, thereby generating an electric field, as illustrated in Fig. 60. This electric field causes movement (concentration) of charged ions 216 to the boundary region.

As factors which facilitate the movement (concentration) of charged ions 216 to the boundary region, there are high contrasts between adjacent images and high temperatures of the liquid crystal layer 213.

On the other hand, a plasma display device which is a self-luminous type display device may also induce similar afterimage phenomena. Therefore, for plasma display devices, there are methods for reducing afterimage phenomena, such as screen wipe, screen wiper, complementary color reversal, peak brightness control, screen movement. Here, the screen wipe is a method of displaying a white pattern image over the entire screen for a certain time period. The screen wiper is a method of moving a white band-shaped image over the screen at constant intervals. The complementary color reversal is a method of reversing colors. Further, the peak brightness control is a method of suppressing the peak brightness. The screen movement is a method of periodically moving an image. For example, Japanese Patent Application Laid-Open No. 2002-91373 describes, in detail, methods for reducing afterimage phenomena in plasma display devices.

As described above, conventional display devices have the problem of afterimages caused by still images in cases of displaying a still image for a long time and, thereafter, displaying a different image. Particularly, display devices used at public places are operated for longer times and also often display still images for longer times and, therefore, such display devices have been prone to induce afterimages.

Also, it is possible to utilize afterimage reducing methods which have been suggested for self-luminous type display devices such as plasma display devices. However, afterimage phenomena in plasma display devices are induced when the same image is kept displayed for a long time, which causes burning of the luminophor. This mechanism of the occurrence of afterimages is different from that of non-self-luminous display devices such as liquid crystal display devices. Accordingly, the methods other than the screen movement can not be utilized for non-self-luminous display devices for alleviating afterimage phenomena.

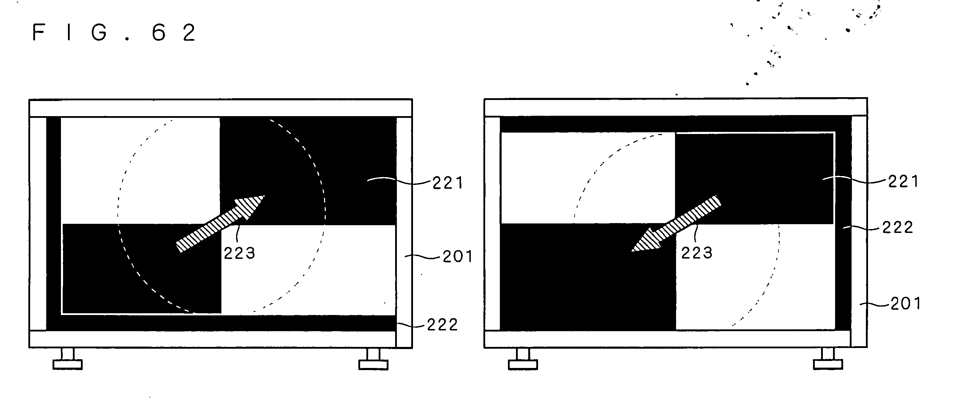

Further, the screen movement causes a border region (back raster) 222 in which a displayed image 221 is not displayed, in the display region 220, as illustrated in Fig. 61. In Fig. 61, the displayed image 221 of a flag checker image is moved in a direction of image movement 223 which is an upper leftward direction, thereby inducing border regions 222 at a right region and a lower region of the display region 220.

Accordingly, even when the screen movement is simply incorporated into a non-self-luminous display device, regions having higher contrasts are generated at the boundary regions between the border region 222 and the displayed image 221, thereby further inducing afterimage phenomena. This is because, in Fig. 61, when the border region is black colored at a non-displaying state, an afterimage phenomenon is newly induced at the boundary region between the white image in the displayed image 221 and the border region 222. There is illustrated, in an enlarged view in Fig. 61, a boundary afterimage 224 induced in the case where a gray single-colored image is displayed after a flag checker image is displayed for a long time, as a displayed image 221.

Further, a large-sized display apparatus employing plural display devices has the problem of unviewability of displayed images, in cases where the respective display devices move their displayed images in different directions or to different positions. Fig. 62 illustrates a large-sized display apparatus including two display devices which are arranged in a lateral direction, wherein the right display device moves the displayed image in the direction of image movement 223 which is an upper-rightward direction while the left display device moves the displayed image in the direction of image movement 223 which is a lower-leftward direction.

### SUMMARY OF THE INVENTION

It is an object of the present invention to provide display devices capable of alleviating afterimage phenomena or, even in the event of the occurrence of afterimages, reducing the visibility thereof and also to provide a large-sized display apparatus employing the same.

The present invention provides a non-self-luminous display device including an image changing unit and an image moving unit. The image changing unit optionally changes the size of a displayed image. The image moving unit moves the position of the displayed image which has been changed in size by the image changing unit, on the display region, at predetermined time intervals.

The display device according to the present invention optionally changes the size of a displayed image and moves the position thereof on the display region at predetermined time intervals, which can reduce the afterimage phenomenon caused by the displayed image and also can prevent the occurrence of a border region due to the movement of the displayed image, thereby offering an effect of reducing the afterimage phenomenon generated at a border region.

The present invention also provides a non-self-luminous display device including an image signal level detection unit and a γ conversion unit. The image signal level detection unit detects whether or not a displayed image includes an image in a lower tone region lower than a predetermined tone. The γ conversion unit performs an offset process for changing, by a predetermined amount, the brightness of respective tones in the lower tone region, when the displayed image includes an image in the lower tone region.

The display device according to the present invention performs an offset process for changing, by a predetermined amount, the brightness of respective tones in the lower tone region, thereby offering an effect of reducing the afterimage phenomenon due to the image in the displayed image in the lower tone region.

The present invention also provides a non-self-luminous display device including an image movement detection unit and a backlight control unit. The image movement detection unit detects whether the displayed image is a moving image or a still image. The backlight control unit reduces the brightness of a backlight to below a predetermined brightness, when the image movement detection unit detects a still image for a predetermined time.

The display device according to the present invention reduces the brightness of the backlight to below a predetermined brightness, thereby offering effects of reducing the internal temperature of the display device and reducing the afterimage phenomenon due to the displayed image.

The present invention also provides a non-self-luminous display device including a human detection sensor unit and a backlight control unit. The human detection sensor unit detects whether or not a person exists in a predetermined range around the display device. The backlight control unit can partially control lighting/not-lighting of the brightness of the backlight. When the human detection sensor unit does not detect a person, the backlight control unit lights a portion of the backlight in order to display only the displayed image of a predetermined region, and when the human detection sensor unit detects a person, the backlight control unit lights the entire surface of the backlight.

The display device according to the present invention lights a portion of the backlight in order to display only the displayed image of a predetermined region when the human detection sensor unit does not detect a person, which can offer effects of reducing the internal temperature of the display device and reducing the afterimage phenomenon due to the displayed image.

The present invention also provides a non-self-luminous display device including an image signal level detection unit and a band variable filter unit. The image signal level detection unit determines whether or not a displayed image includes a boundary region having a tone difference equal to or greater than a predetermined tone difference. The band variable filter unit changes, in a stepwise manner, the tone difference at the boundary region detected by the image signal level detection unit to below the predetermined tone difference.

The display device according to the present invention changes, in a stepwise manner, the tone difference at a boundary region to below a predetermined tone difference, thereby offering an effect of reducing the afterimage phenomenon at the boundary region.

The present invention also provides a non-self-luminous display device including a γ conversion unit capable of optionally changing the number of the tones of a displayed image. The γ conversion unit changes the number of the tones of the displayed image including an afterimage resulted from displaying the displayed image which is a still image for a long time.

The display device according to the present invention changes the number of tones of a displayed image, thereby offering an effect of correcting the displayed image such that, even in the event of the occurrence of an afterimage on the display device, the afterimage is made invisible.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a display device according to the present invention;
Figs. 2A and 2B illustrate a process for reducing the afterimage phenomenon in the display device according to the first embodiment of the present invention;
Fig. 3 illustrates a process for reducing the afterimage phenomenon in the display device according to the first embodiment of the present invention;
Fig. 4 illustrates a pattern of movement of a displayed image in the display device according to the first embodiment of the present invention;
Fig. 5 illustrates a process for reducing the afterimage phenomenon in the display device according to the first embodiment of the present invention;
Fig. 6 illustrates a process for reducing the afterimage phenomenon in the display device according to the first embodiment of the present invention;
Fig. 7 illustrates a process for reducing the afterimage phenomenon in the display device according to the first embodiment of the present invention;
Fig. 8 illustrates afterimages in the display device according to the first embodiment of the present invention;
Fig. 9 illustrates a pattern of movement of a displayed image in the display device according to a second embodiment of the present invention;
Fig. 10 illustrates a pattern of movement of a displayed image in the display device according to the second embodiment of the present invention;
Fig. 11 illustrates a pattern of movement of a displayed image in the display device according to the second embodiment of the present invention;
Fig. 12 illustrates a pattern of movement of a displayed image in the display device according to the second embodiment of the present invention;
Fig. 13 illustrates a process for reducing the afterimage phenomenon in the display device according to a fourth embodiment of the present invention;
Fig. 14 illustrates a DC unbalance quantity in the display device according to the fourth embodiment of the present invention;
Fig. 15 illustrates a process for reducing the afterimage phenomenon in the display device according to the fourth embodiment of the present invention;
Fig. 16 illustrates a DC unbalance quantity in the display device according to the fourth embodiment of the present invention;
Fig. 17 illustrates a process for reducing the afterimage phenomenon in the display device according to the fourth embodiment of the present invention;
Fig. 18 illustrates a DC unbalance quantity in the display device according to the fourth embodiment of the present invention;
Fig. 19 illustrates a process in a display device according to a fifth embodiment of the present invention;
Fig. 20 illustrates a process in the display device according to the fifth embodiment of the present invention;
Fig. 21 illustrates a large-sized display apparatus according to a sixth embodiment of the present invention;
Fig. 22 illustrates the large-sized display apparatus according to the sixth embodiment of the present invention;
Fig. 23 illustrates control signals in the large-sized display apparatus according to the sixth embodiment of the present invention;
Figs. 24A and 24B illustrate a process for reducing the afterimage phenomenon in the display device according to a seventh embodiment of the present invention;
Fig. 25 illustrates a process for reducing the afterimage phenomenon in the display device according to the seventh embodiment of the present invention;
Fig. 26 illustrates a DC unbalance quantity in the display device according to the seventh embodiment of the present invention;
Fig. 27 illustrates a γ conversion in the display device according to the seventh embodiment of the present invention;
Fig. 28 illustrates a γ conversion in the display device according to the seventh embodiment of the present invention;
Fig. 29 illustrates a process in a display device according to an eighth embodiment of the present invention;
Fig. 30 illustrates a process in the display device according to the eighth embodiment of the present invention;
Figs. 31A and 31B illustrate a process for reducing the afterimage phenomenon in a display device according to a ninth embodiment of the present invention;
Fig. 32 illustrates a process for reducing the afterimage phenomenon in the display device according to the ninth embodiment of the present invention;
Fig. 33 illustrates a concentration of charged ions in the display device, at a high temperature, according to the ninth embodiment of the present invention;
Fig. 34 illustrates a concentration of charged ions in the display device, at a low temperature, according to the ninth embodiment of the present invention;
Fig. 35 illustrates the relationship between the brightness and the internal temperature of the display device according to the ninth embodiment of the present invention;
Fig. 36 illustrates a process in a display device according to a tenth embodiment of the present invention;
Fig. 37 illustrates a process in the display device according to the tenth embodiment of the present invention;
Fig. 38 illustrates a process in the display device according to the tenth embodiment of the present invention;
Fig. 39 illustrates a process in the display device according to the tenth embodiment of the present invention;
Fig. 40 illustrates a lamp lighting region of the display device according to the tenth embodiment of the present invention;
Fig. 41 illustrates a process in the display device according to the tenth embodiment of the present invention;
Figs. 42A and 42B illustrate a process for reducing the afterimage phenomenon in a display device according to an eleventh embodiment of the present invention;
Fig. 43 illustrates a process for reducing the afterimage phenomenon in the display device according to the eleventh embodiment of the present invention;
Fig. 44 illustrates a process for reducing the afterimage phenomenon in a display device according to a twelfth embodiment of the present invention;
Fig. 45 illustrates a DC unbalance quantity in the display device according to the twelfth embodiment of the present invention;
Fig. 46 illustrates a process for reducing the afterimage phenomenon in the display device according to the twelfth embodiment of the present invention;
Fig. 47 illustrates a DC unbalance quantity in the display device according to the twelfth embodiment of the present invention;
Fig. 48 illustrates a process in a display device according to a thirteenth embodiment of the present invention;
Fig. 49 illustrates a process in the display device according to the thirteenth embodiment of the present invention;
Figs. 50A and 50B illustrate a process for reducing the afterimage phenomenon in a display device according to a fourteenth embodiment of the present invention;
Fig. 51 illustrates a γ conversion in the display device according to the fourteenth embodiment of the present invention;
Fig. 52 illustrates an afterimage phenomenon in a conventional display device;
Fig. 53 illustrates an afterimage phenomenon in the conventional display device;
Fig. 54 illustrates an afterimage phenomenon in the conventional display device;
Fig. 55 illustrates an afterimage phenomenon in the conventional display device;
Fig. 56 illustrates an afterimage phenomenon in the conventional display device;
Fig. 57 illustrates a mechanism of the occurrence of an afterimage phenomenon;
Fig. 58 illustrates a mechanism of the occurrence of an afterimage phenomenon;
Fig. 59 illustrates a mechanism of the occurrence of an afterimage phenomenon;
Fig. 60 illustrates a mechanism of the occurrence of an afterimage phenomenon;
Fig. 61 illustrates a process for reducing the afterimage phenomenon in the conventional display device; and
Fig. 62 illustrates problems of a conventional large-sized display apparatus.

### DESCRIPTION OF THE PREFERRED EMBODIMENTS

### First Embodiment

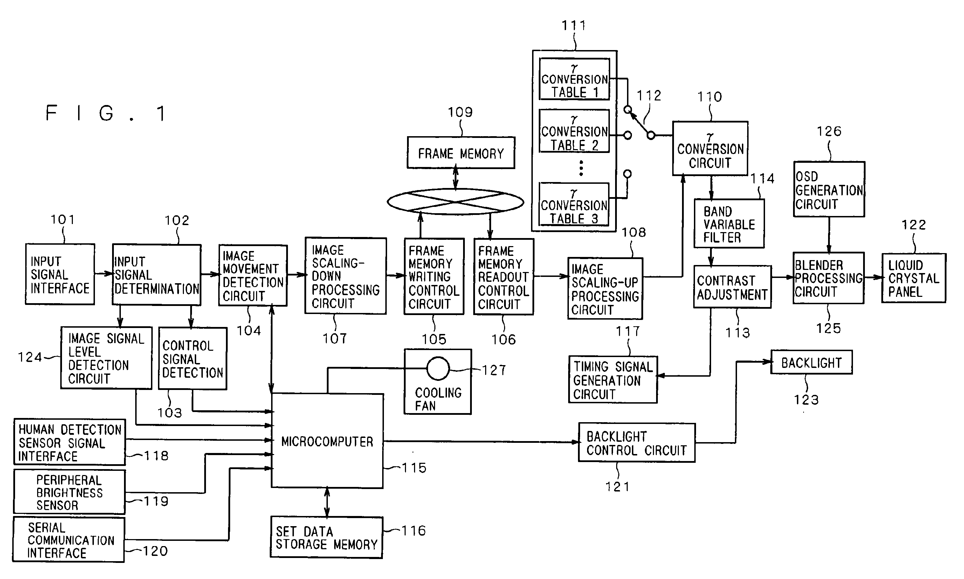

Fig. 1 is a structure diagram of a display device according to a first embodiment. The display device illustrated in Fig. 1 is a non-self-luminous type liquid crystal display device. The display device illustrated in Fig. 1 includes an input signal interface 101, an input signal determination circuit 102, a control signal detection circuit 103, an image movement detection circuit 104, a frame memory writing control circuit 105, a frame memory readout control circuit 106, an image scaling-down processing circuit 107, an image scaling-up processing circuit 108 and a frame memory 109. Further, the display device illustrated in Fig. 1 includes a γ conversion processing circuit 110, a γ conversion table 111, a γ conversion table selection means 112, a contrast adjustment circuit 113, a band variable filter 114, a microcomputer 115, a set data storage memory 116, a timing signal generation circuit 117, a human detection sensor signal interface 118 and a peripheral brightness sensor 119. Further, the display device illustrated in Fig. 1 includes a serial communication interface 120, a backlight control circuit 121, a liquid crystal display panel 122, backlight 123, an image signal level detection circuit 124, a blender processing circuit 125, an OSD generation circuit 126 and a cooling fan 127.

Next, the operation of the display device according to this embodiment will be described, by using Fig. 1. First, digitalized image signals are input to the input signal interface 101. The input signal determination circuit 102 determines, from the input image signals, the resolution, the horizontal frequency and the vertical frequency and the like of the to-be-displayed image. The results of determinations are input to the microcomputer 115 through the control signal detection circuit 103 and the image signal level detection circuit 124. The image signal level detection circuit 124 detects the average brightness, the maximum tone and the minimum tone of the input image signals and the area of the to-be-displayed image and the like and transmits them to the microcomputer 115. The control signal detection circuit 103 separates, from the image signals, control signals including synchronization signals superimposed on the image signals in the vertical retrace time and transmits the control signals to the microcomputer 115.

The microcomputer 115 calculates the scaling-up ratio or the scaling-down ratio for the to-be-displayed image, in accordance with the predetermined resolution of the liquid crystal display panel 122, and performs settings of the image scaling-down processing circuit 107 and the image scaling-up processing circuit 108. The timing signal generation circuit 117 generates timing clocks for the respective circuit portions and supplies them to the respective circuit portions (not shown). The frame memory 109, the frame memory writing control circuit 105 and the frame memory readout control circuit 106 convert the image signals into image signals with timings suitable for displaying on the liquid crystal display panel 122. The γ conversion circuit 110 performs a γ conversion on the to-be-displayed image by using the γ conversion table 111 selected by the γ conversion table selection means 112.

The to-be-displayed image converted by the γ conversion circuit 110 is passed through the band variable filter 114 and the contrast adjustment circuit 113, then is mixed with an image generated from the OSD generation circuit 126 by the blender processing circuit 125 and is transmitted to the liquid crystal display panel 122.

On the other hand, the human detection sensor signal interface 118 receives signals from a human detection sensor (not shown) and transmits the data to the microcomputer 115, wherein the human detection sensor detects whether or not a person exists in a predetermined range around the display device. The peripheral brightness sensor 119 determines the brightness around the display device and transmits the data to the microcomputer 115. The serial communication interface 120 receives control signals from the outside and transmits these control signals to the microcomputer 115. The cooling fan 127 is for cooling the display device and is controlled by the microcomputer 115.

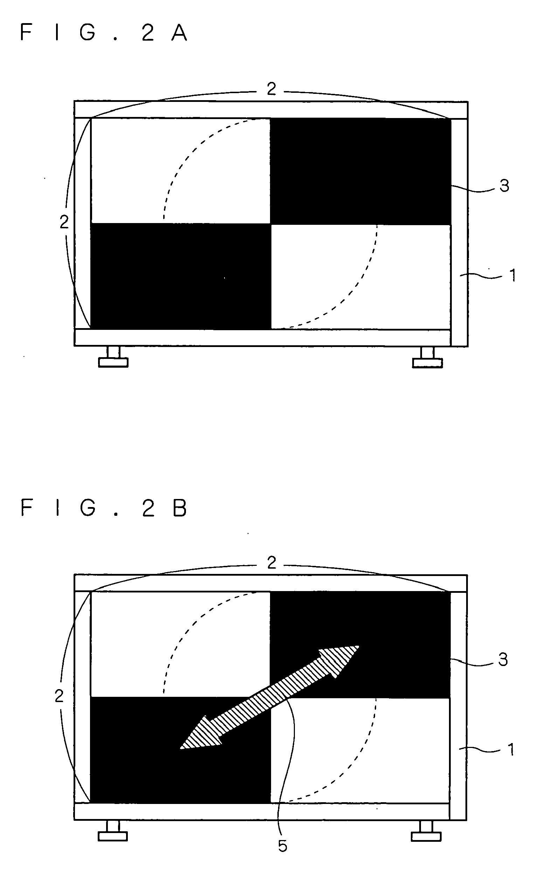

Next, there will be described a process for reducing the afterimage phenomenon in the display device according to this embodiment. Fig. 2A illustrates the display device according to this embodiment illustrating a white-and-black-colored flag checker image. In Fig. 2A, there is displayed a flag checker image 3 in the image displayable region (hereinafter, referred to as a display region) of the display device 1. The broken-line circle in Fig. 2A is shown for ease of recognition of the size of the displayed image. The same applies to the following drawings. When a displayed image as in Fig. 2A is displayed for a long time, the display device according to this embodiment executes a process for reducing the afterimage phenomenon, as will be described later. In the display device according to this embodiment, first, the image scaling-up processing circuit 108 enlarges a to-be-displayed image, as illustrated in Fig. 2B. On the display device illustrated in Fig. 2B, the enlargement of the displayed image is designated by the dot-line circle and an arrow 5 representing the enlargement.

After the enlargement of the displayed image, the display image is moved as illustrated in Fig. 3. In Fig. 3, the displayed image is moved as designated by an arrow indicating the upper-rightward direction (in the direction of movement 6). In this embodiment, even when the displayed image is moved, there is not a region displaying no image (border region), in the display region 2, since the displayed image has been enlarged. Namely, in this embodiment, the scaling-up ratio of the displayed image is determined depending on the amount of movement of the displayed image. Namely, in this embodiment, the to-be-displayed image is made greater than the display region 2 in advance, in order to prevent the occurrence of a border region due to movement of the displayed image.

The display device according to this embodiment moves the enlarged displayed image at certain time intervals, with the frame memory writing control circuit 105 and the frame memory readout control circuit 106. Namely, the frame memory readout control circuit 106 reads a to-be-displayed image written by the frame memory writing control circuit 105, while displacing it by, for example, a single pixel in an upper-rightward direction to move the to-be-displayed image.

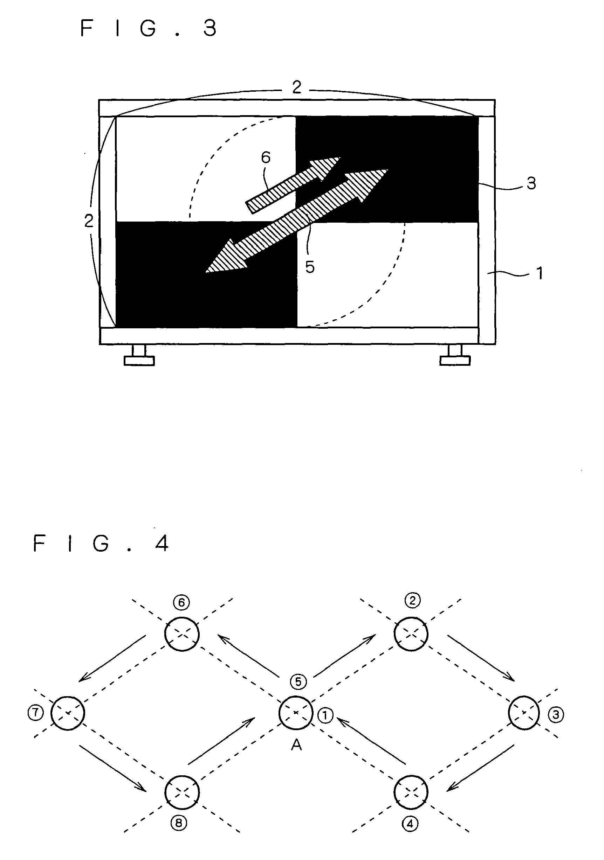

The displayed image is moved not only in the direction of movement 6 illustrated in Fig. 3, and the direction of movement of the displayed image is periodically changed as illustrated in Fig. 4. Fig. 4 illustrates the locus of the movement of a pixel A in a displayed image. Fig. 4 illustrates that the position of the pixel A in the displayed image is repeatedly moved in the directions of arrows, in the order designated the numbers in circles (1), (2), (3), ..., (7) and (8). Further, due to the movement of the pixel A, the entire displayed image is also moved in the directions of the movement of the pixel A.

In the aforementioned process for reducing the afterimage phenomenon, the to-be-displayed image is enlarged, in order to prevent the occurrence of a region displaying no image (a border region) in the display region 2, even when the displayed image is moved. However, when the to-be-displayed image is enlarged and moved, it is possible that a portion of the displayed image gets out of the display region 2, thus making it impossible to display a required image or information therein.

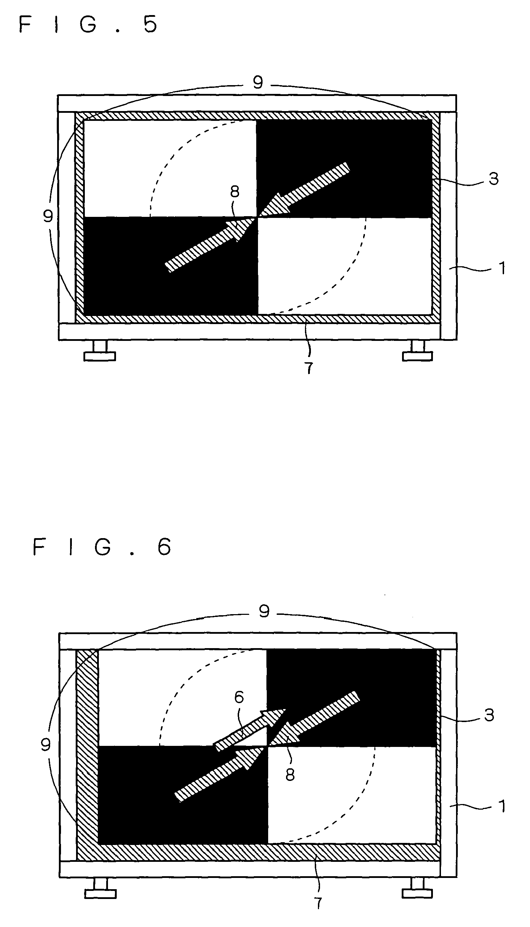

Therefore, as a modified example of the aforementioned process for reducing the afterimage phenomenon, the to-be-displayed image is scaled down and an optional image (background image) is inserted into the region of the display region 2 which lies outside the optional image, as illustrated in Fig. 5. In Fig. 5, the flag checker image 3 is scaled down to a size smaller than the display region 2 and an optional image 7 as a background image is inserted to the border region outside the flag checker image 3. In Fig. 5, the scaling-down of the flag checker image 3 is designated by a dot-line circle and an arrow 8 indicating the scaling-down. Hereinafter, the region of the scaled-down flag checker image 3 will be referred to as an information region 9.

In order to enable displaying the information region 9 anytime in the display region 2 even when the displayed image is moved, it is necessary to scale down the to-be-displayed image, as illustrated in Fig. 1. The scaling-down of the to-be-displayed image is performed by the image scaling-down processing circuit 107. In Fig. 5, there is displayed the information region 9 more inward than the display region 2 by several millimeters (or several tens of millimeters). When the displayed image is scaled down, a border region is generated outside the displayed image, and an optional image 7 is inserted to the border region, wherein the optional image 7 prevents the occurrence of a tone difference at the boundary region between the border region and the flag checker image 3.

The OSD generation circuit 126 illustrated in Fig. 1 generates such an optional image 7 on the basis of images in the display image in the vicinity of the boundary of the displayed image, and then the blender processing circuit 125 mixes it with the to-be-displayed image and displays it in the display region 2. Fig. 6 illustrates the display device having an information region 9 (the flag checker image 3) moved in an upper-rightward direction (in the direction of movement 6). In Fig. 6, there are generated border regions at the left of the display region 2 and below the display region 2 and an optional image 7 is inserted to the border regions. In this embodiment, the blender processing circuit 125 and the OSD generation circuit 126 form an image generation/insertion unit.

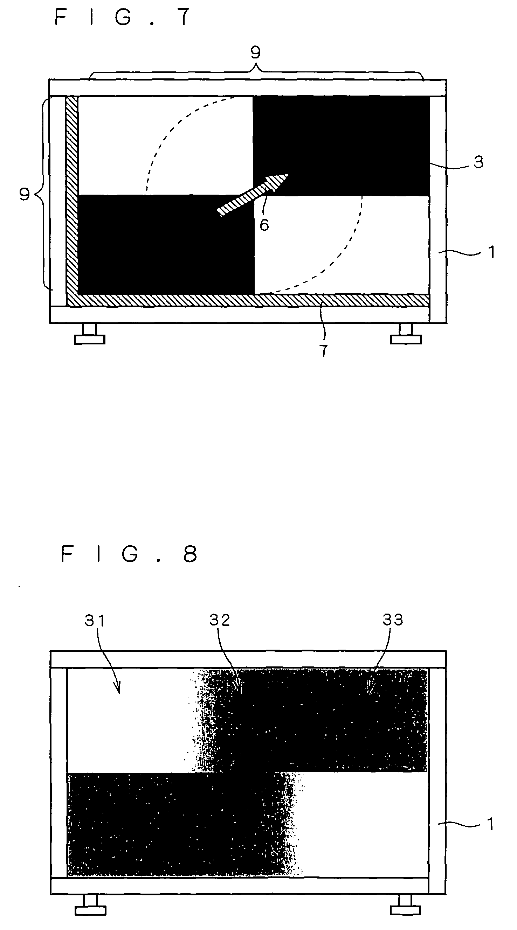

Also, in the present invention, it is possible to execute a process for inserting an optional image 7 into a border region resulted from the movement of the displayed image, even in cases of not scaling up or scaling down the displayed image. Fig. 7 illustrates the display device in the case where the displayed image is moved in an upper-rightward direction (in the direction of movement 6), wherein the displayed image has been neither scaled up nor scaled down. An optional image 7 is inserted to the generated border region in Fig. 7, wherein the OSD generation circuit 126 generates the optional image 7 on the basis of images in the displayed image in the vicinity of the boundary and then the blender processing circuit 125 mixes it with the flag checker image 3 and then displays it.

The OSD generation circuit 126 generates an optional image 7 to be inserted to the border portions in Figs. 5 to 7, on the basis of the brightness (tone) and the colors of the to-be-displayed image (for example, a flag checker image 3), which are determined by the image signal level detection circuit 124 illustrated in Fig. 1.

As described above, in the display device according to this embodiment, the image scaling-up processing circuit 108, which is the image changing unit, scales up a to-be-displayed image, and the frame memory writing control processing circuit 105 and the frame memory readout control processing circuit 106, which are the image moving units, move the to-be-displayed image, for alleviating the afterimage phenomenon caused by the displayed image and also for preventing the occurrence of border regions due to the movement of the to-be-displayed image, thereby reducing the afterimage phenomenon caused in the border regions.

Fig. 8 illustrates a case where a flag checker image 3 is displayed for a long time and thereafter a gray single-colored image is displayed on the display device according to this embodiment. In Fig. 8, the plain afterimage 31 caused by the white image in the flag checker image 3, the plain afterimage 33 caused by the black image in the flag checker image 3 and the boundary afterimage 32 caused by the boundary between the white image and the black image are all alleviated, in comparison with the afterimage phenomenon on the display device illustrated in Fig. 55, since the aforementioned process for reducing the afterimage phenomenon has been performed therein.

Further, in the display device according to this embodiment, the image scaling-down processing circuit 107, which is the image changing unit, scales down a to-be-displayed image, and the frame memory writing control processing circuit 105 and the frame memory readout control processing circuit 106, which are the image moving units, move the to-be-displayed image and insert an optional image 7 as a background image to the border regions, for reducing the afterimage phenomenon and also for displaying all the information of the displayed image. Further, even when a border region is generated in the display region 2, an optional image 7 as a background image is inserted thereto, which can alleviate the boundary afterimage generated at the boundary region between the border region and the displayed image.

Further, in the display device according to this embodiment, the OSD generation circuit 126 and the blender processing circuit 125, which are the image generation/insertion units, perform the creation and insertion of such optional images 7 to be inserted to border regions resulted from movement of the to-be-displayed image. This enables displaying some images anytime in the display region 2, thereby reducing the boundary afterimage generated at the boundary region between the border regions and the displayed image.

Further, in the display device according to this embodiment, the OSD generation circuit 126 generates an optional image 7 on the basis of the brightness (tone) and the colors of the to-be-displayed image, which are determined by the image signal level detection circuit 124, thereby further reducing the boundary afterimage generated at the boundary between the border regions and the displayed image.

### Second Embodiment

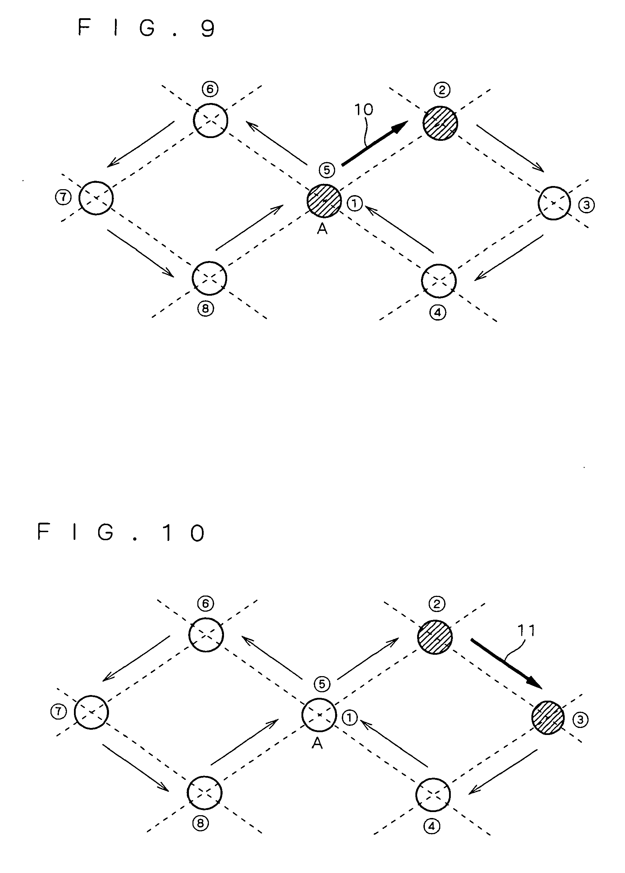

In the first embodiment, as illustrated in Fig. 4, the position of a pixel A is moved in the order designated by the numbers in the circles in the figure (1), (2), (3), ..., (7) and (8). In this embodiment, this movement will be described in more detail. Fig. 9 illustrates a case where a pixel A in a displayed image exists at a position (1) and then is moved to an upper right position (2) along a first direction of movement 10. In this embodiment, for example, in the case where the display device 1 is paused after the first movement, the first end position (2) just before the pause is stored in the set data storage memory 116.

Next, when the display device 1 is activated again, the microcomputer 115 reads the first end position (2) stored in the set data storage memory 116 and starts the movement of the pixel A from the position (2). As illustrated in Fig. 10, the second starting position is the position (2) and the pixel A is moved to a lower right position (3) along a second direction of movement 11. Namely, in this embodiment, in the case of moving the displayed image, the position at the time of pause of the display device 1 (for example, the second end position (3)) is stored in the set data storage memory 116 and, when the display device 1 is activated again, the movement is started from the stored position.

In Figs. 9 and 10, there is illustrated an orderly movement of the pixel A along the positions (1), (2), (3), ..., (7) and (8). However, this embodiment is not limited thereto and a random movement may be performed.

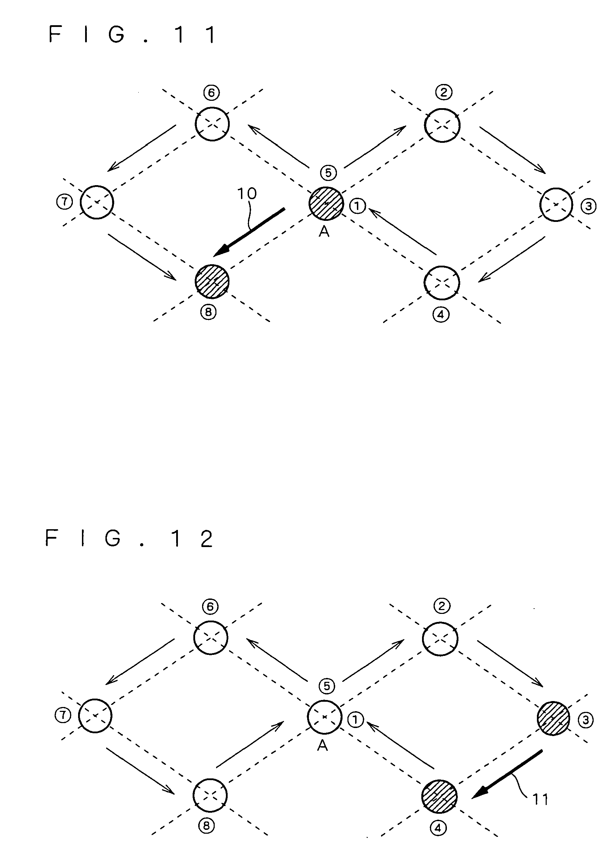

Fig. 11 illustrates a case where a pixel A in a displayed image exists at a position (1) and then is moved to a lower left position (8) along a first direction of movement 10. In Fig. 11, the movement of the pixel A is not in accordance with the order of the positions (1), (2), (3), ..., (7) and (8) and it moves in a random manner. Such random movement can be realized by causing the microcomputer 115 to generate random numbers.

Next, when the display device is paused at the time the pixel A exists at the position (8) after the first movement, the first starting position (1), the first direction of movement 10 and the first end position (8) are stored in the set data storage memory 116. Then, when the display device 1 is activated again, the microcomputer 115 determines a path which is different from the stored position and direction, from the first starting position, the first direction of movement 10 and the first end position which are stored therein, and determines the second starting position and the second direction of movement. As illustrated in Fig. 12, the second starting position is a position (3) and the pixel A is moved to a lower left position (4) along the second direction of movement 11.

Although only the pixel A in the displayed image has been described above, the other pixels in the displayed image are similarly moved and, therefore, the entire displayed image is moved similarly to the pixel A.

As described above, the display device according to this embodiment enables dispersing the directions of movement over the entire display screen, which can further reduce the boundary afterimages generated at the boundaries in a displayed image (for example, the boundary region between a white image and a black image in a flag checker image 3).

### Third Embodiment

A display device according to this embodiment determines whether or not a to-be-displayed image is a moving image or a still image and, when it is a still image, executes the process for reducing the afterimage phenomenon which has been described in the first and second embodiments. More specifically, the image movement detection circuit 104 illustrated in Fig. 1 determines whether or not a to-be-displayed image is a moving image or a still image and transmits the result of determination to the microcomputer 115. When the to-be-displayed image is a still image which is prone to induce an afterimage phenomenon and also when the to-be-displayed image is kept displayed for a longer time than a predetermined time period, the microcomputer 115 executes the process described in the first and second embodiment for, for example, enlarging and moving the to-be-displayed image. On the other hand, when the to-be-displayed image is a moving image, the process is terminated.

As described, above, when the image movement detection circuit 104 detects a still image for a predetermined time period, the display device according to this embodiment executes a process for, for example, moving the displayed image, which can reduce the afterimages in the displayed image. Further, the display device according to this embodiment can reduce the unviewability of the displayed image due to the movement of the displayed image, in the case where the to-be-displayed image is a moving image.

### Fourth Embodiment

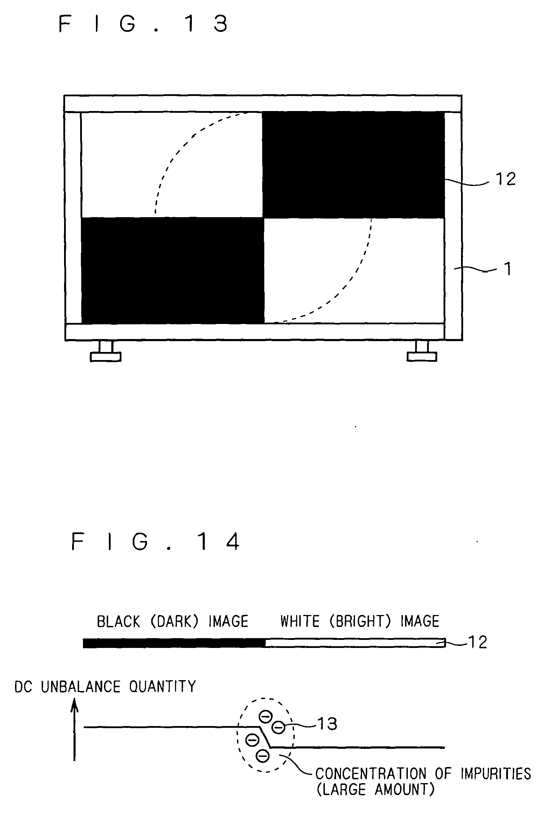

Fig. 13 illustrates a display device displaying a flag checker image 12 having a displayed image contrast (tone difference) higher than a predetermined value. In the display of Fig. 13, the images constituting the displayed image contrast higher than the predetermined value both have areas greater than a predetermined area. The predetermined value and the predetermined area are set by the display device. For example, for a to-be-displayed image having 256 tones, it is possible to set the predetermined value to 128 tones and it is possible to set the predetermined area to one fourth the display region 2. In Fig. 13, the displayed image contrast constituted by the white image (0 tone) and the black image (255 tones) is 255 tones, wherein the areas of the respective images are one half the display region 2. In the present specification, description will be given, on the assumption that the to-be-displayed image has 256 tones (for each of RGB), unless otherwise specified.

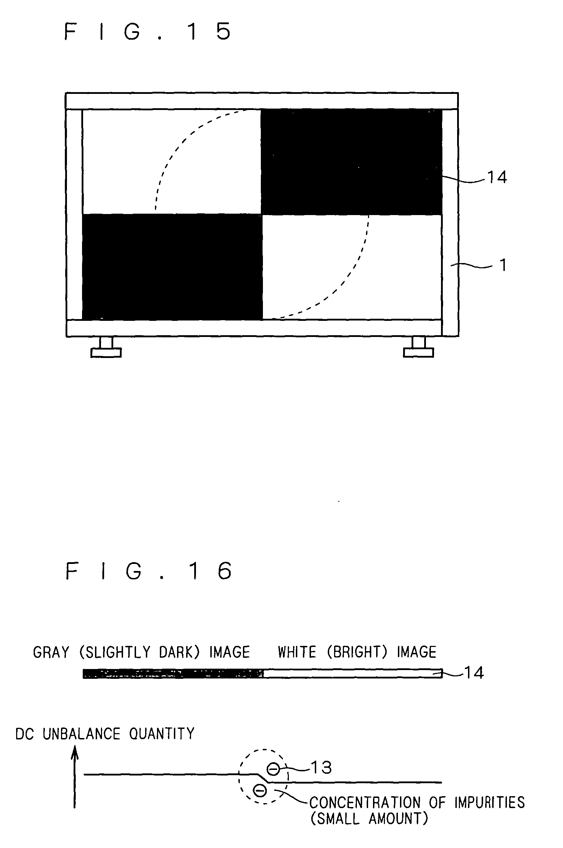

Fig. 14 schematically illustrates a DC unbalance quantity applied to a boundary region, in the case where the to-be-displayed image has a contrast higher than a predetermined value. In Fig. 14, there is a great difference between the DC unbalance quantity in the black image region and the DC unbalance quantity in the white image region, which causes an electric field at the boundary region therebetween, thereby resulting in a concentration of charged ions 13 at the region. Consequently, regions having displayed image contrasts higher than a predetermined value are more prone to induce afterimage phenomena than the other regions, and such regions are significantly affected by afterimages.

Therefore, in the display device according to this embodiment, the image signal level detection circuit 124 detects the contrast of the to-be-displayed image. Further, the image signal level detection circuit 124 detects the areas of images constituting a displayed image contrast higher than a predetermined value and transmits the detected values along with the displayed image contrast to the microcomputer 115. On the basis of the detected values and the like, the microcomputer 115 determines the amount of movement of the to-be-displayed image. For example, in the case where the to-be-displayed image has a higher contrast than the predetermined value and the images have greater areas than a predetermined area, the microcomputer 115 sets a greater amount of movement of the to-be-displayed image, in order to further reduce the influence of the afterimage phenomenon. The amount of movement of the to-be-displayed image is controlled by the frame memory writing control circuit 105 and the frame memory readout control processing circuit 106.

On the other hand, Fig. 15 illustrates a display device displaying a flag checker image 14 having a displayed image contrast lower than a predetermined value. In Fig. 15, the displayed image contrast lower than the predetermined value is a tone difference (for example, 50 tones) between a white image (0 tone) and a gray image (for example, 50 tones).

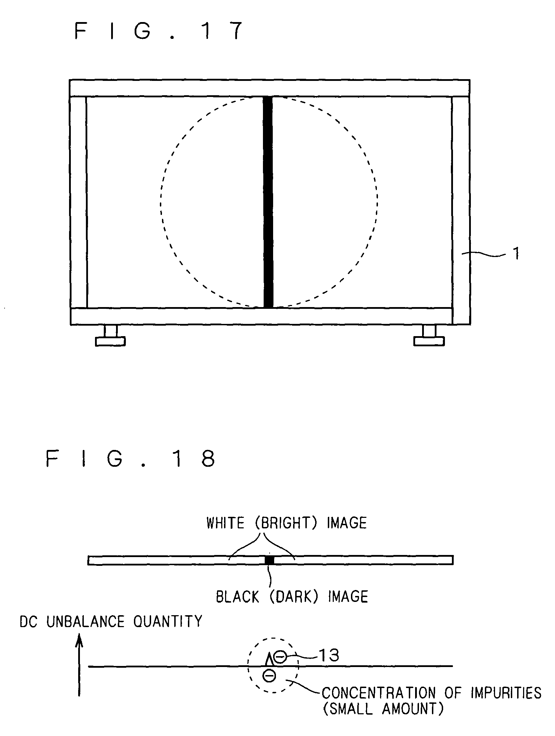

In the case where the to-be-displayed image has a displayed image contrast lower than the predetermined value as in Fig. 15, there is a small DC unbalance quantity difference at the boundary region between the white image and the gray image, as illustrated in Fig. 16. Therefore, the electric field generating at the boundary region is relatively small, thereby resulting in a small concentration of charged ions 13. Accordingly, in the case where the to-be-displayed image has a displayed image contrast lower than the predetermined value since the to-be-displayed image includes only regions having lower contrasts than the predetermined value, the amount of movement of the to-be-displayed image is reduced in the process for reducing the afterimage phenomenon.

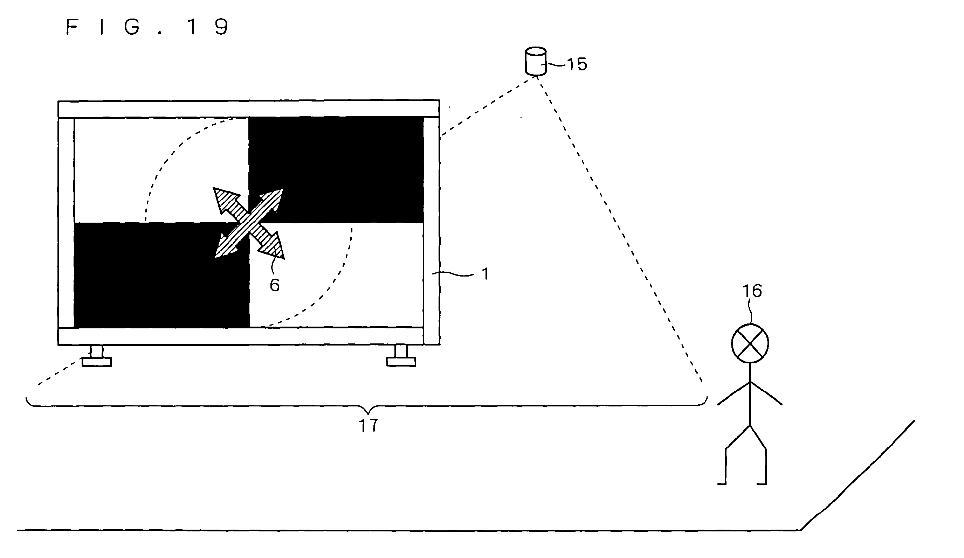

Fig. 17 illustrates a display device displaying a displayed image including a white image (0 tone) and a black image (255 tones) which constitute a displayed image contrast higher than a predetermined value. However, in Fig. 17, the area of the white image (0 tone) is greater than a predetermined area while the area of the black image (255 tones) is equal to or less than the predetermined area. Therefore, in the display device of Fig. 17, unlike the displayed image of Fig. 13, an image (black image) constituting the displayed image contrast higher than the predetermined value has an area equal to or less than the predetermined area. The area of this image is equal to or less than the predetermined area, the DC unbalance quantity at the boundary region is locally changed, as illustrated in Fig. 18. Consequently, the electric field generating at the boundary region is relatively small, thereby resulting in a small concentration of charged ions 13 at the boundary. Accordingly, in the case of a displayed image as in Fig. 17, the displayed image is required to be moved by only a smaller amount, in the process for reducing the afterimage phenomenon.

As described above, the display device according to this embodiment changes the amount of movement of the to-be-displayed image, depending on the contrast of the to-be-displayed image and the like, thereby reducing the boundary afterimages generating at the boundary regions in the displayed image (for example, the boundary regions between the white image and the black image in the flag checker image 12). Further, the display device according to this embodiment reduces the amount of movement of the to-be-displayed image, in the case where the to-be-displayed image has a contrast lower than a predetermined value, for reducing the unviewability of the displayed image due to the movement of the displayed image.

### Fifth Embodiment

A display device according to this embodiment is a display device including a human detection sensor. Fig. 19 illustrates a display device 1 including a human detection sensor 15. The human detection sensor 15 illustrated in Fig. 19 detects whether or not a person 16 exists in a human detection sensor operating region 17 around the display device 1. Further, the human detection sensor 15 is connected to the human detection sensor signal interface 118 of the display device 1 in either a wired manner or a wireless manner.

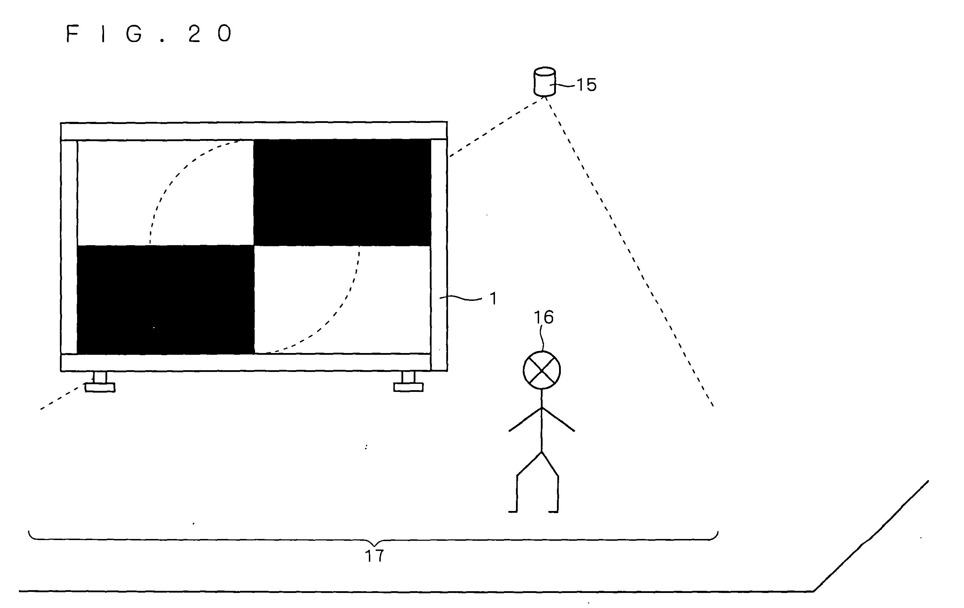

In the event that a person 16 enters the human detection sensor operating region 17 as in Fig. 20, the human detection sensor 15 sends a human detection sensor signal to the human detection sensor signal interface 118. On the basis of the human detection sensor signal, the display device 1 terminates the process for, for example, moving the to-be-displayed image. On the contrary, when no person 16 exists in the human detection sensor operating region 17, the display device 1 executes the process for moving the to-be-displayed image, for example, as designated by the direction of movement 6.

As described above, in the display device according to this embodiment, when a person 16 watching the display device 1 does not exist in a predetermined region around the display device 1, the image changing unit and the image moving unit perform the process for reducing the afterimage phenomenon on the to-be-displayed image, thereby alleviating boundary afterimages generating at the boundary regions in the displayed image. Further, when a person 16 watching the display device 1 exists in the predetermined region around the display device 1, the display device according to this embodiment terminates the process for reducing the afterimage phenomenon for the to-be-displayed image, thereby alleviating the unviewability of the image due to the movement of the to-be-displayed image and the like.

### Sixth Embodiment

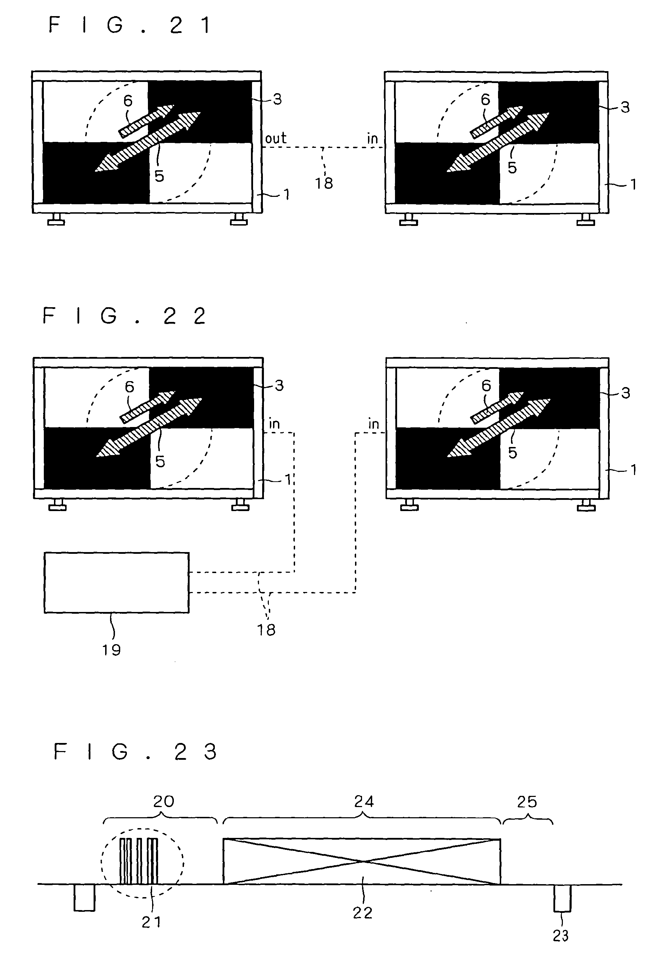

In this embodiment, there will be described a large-sized display apparatus employing plural display devices as aforementioned. As previously described, a large-sized display apparatus employing plural display devices has the problem of unviewability of displayed images, which is induced when the respective display devices move the to-be-displayed images in different directions and to different positions in order to reduce the afterimage phenomenon. Therefore, in the large-sized display apparatus according to this embodiment, as illustrated in Fig. 21, the serial communication interfaces 120 of two display devices 1 are connected to each other through a serial line 18 such as an RS233 so that the left display device 1 transmits control signals (synchronization signals) to the right display devices 1. This can establish synchronization between the two display devices 1, thereby causing the respective to-be-displayed images to be moved in the same direction and the like.

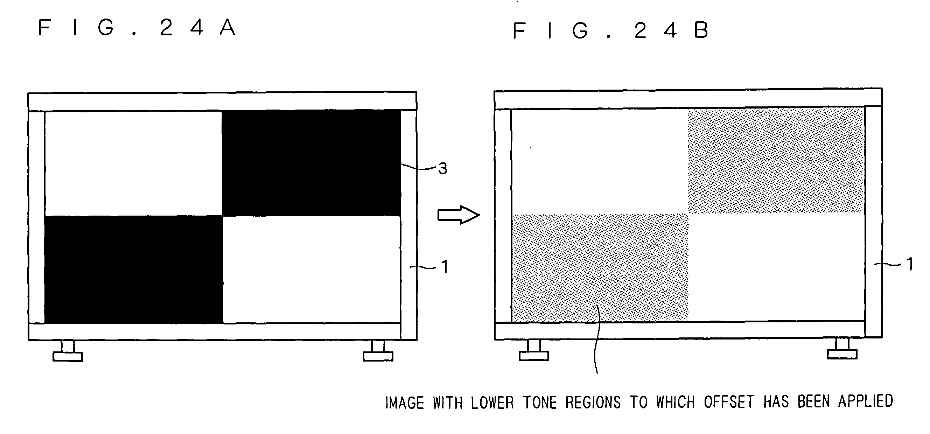

Further, as illustrated in Fig. 22, an external controlling device such as a personal computer 19 is connected to the serial communication interfaces 120 of the respective display devices 1, through serial lines 18. In the case of Fig. 22, similarly, it is possible to establish synchronization between the two display devices 1, thereby causing the respective to-be-displayed images to be moved in the same direction.

In Figs. 21 and 22, the microcomputers 115 process the control signals received through the serial communication interfaces 120 to establish synchronization between the two display devices. Further, the serial lines 18 are merely exemplified and it is also possible to employ parallel lines, wired communication and wireless communication.

On the other hand, instead of employing the serial communication interfaces 120 and the like, it is possible to employ a method for superimposing control signals on the signals (synchronization signals) of to-be-displayed images. Fig. 23 illustrates a schematic view of signals on which control signals (synchronization signals) are superimposed. Control position signals 21 including information about the direction of movement 6, the position, the scaling-up ratio and the like of a to-be-displayed image is inserted to the vertical back porch time interval 20 of signals illustrated in Fig. 23. Then, the respective display devices 1 detect the control position signals 21 at their control signal detection circuits 103, establish synchronization of the to-be-displayed images in terms of the direction of movement 6 and the position to which they are moved, on the basis of the control position signals 21 and adjust the scaling-up ratios of the to-be-displayed images to the same value. The signals of the to-be-displayed image illustrated in Fig. 23 further include image signals 22 and a synchronization signal 23 for the image signals 22. The image signals 22 are inserted in a vertical image time interval 24 while the synchronization signal 23 for the image signals 22 is inserted after the vertical front porch time interval 25.

As described above, the large-sized display apparatus according to this embodiment can also reduce afterimages generated in the displayed images, since the plural display devices can move the respective to-be-displayed images. Further, with the large-sized display apparatus according to this embodiment, the directions of movement, the displaying positions, the scaling-up ratios and the like of the displayed images on the plural display devices can be made equal, thereby improving the viewability of information or images provided by the displayed images displayed on the plural display devices.

### Seventh Embodiment

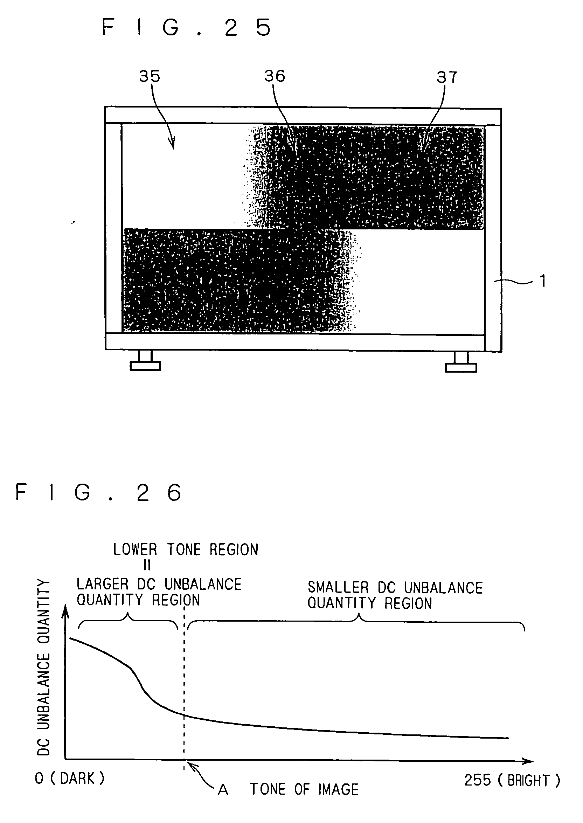

In this embodiment, there will be described a process which is different from the processes for reducing the afterimage phenomenon described in the first to sixth embodiments. Fig. 24A illustrates a display device displaying a flag checker image 3. The flag checker image 3 includes a white image (0 tone) and a black image (255 tones). To the region of the black image (an image having a tone lower than a predetermined tone), the display device according to this embodiment applies an offset (increases the brightness of the lower tone region). Fig. 24B illustrates the display device in which an offset process has been performed on the lower tone region of the displayed image. Fig. 25 illustrates an afterimage phenomenon generated in the case where a gray single-colored image is displayed over the entire screen after the displayed image of Fig. 24B is displayed for a long time. Since in the display of Fig. 25 an offset process has been applied to the black image which is a lower tone region, the plane afterimage 37 caused by the black image has been alleviated, in comparison with the afterimage 206 caused by the black image in Fig. 55. By performing an offset process on the black image, it is also possible to alleviate the DC unbalance quantity difference at the boundary region between the white image and the black image, thereby alleviating the boundary afterimage 36 in Fig. 25, in comparison with the boundary afterimage 207 in Fig. 55.

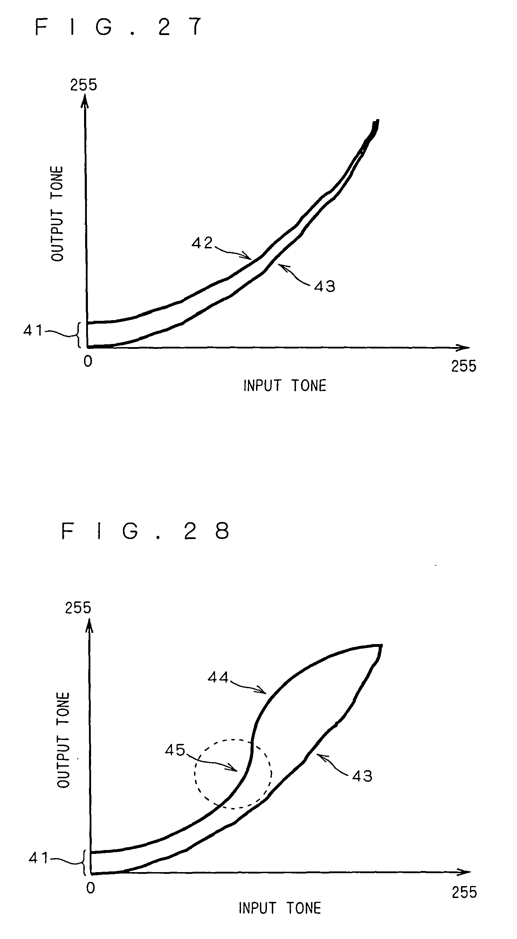

Next, there will be described a mechanism of a process for reducing the afterimage phenomenon by applying an offset to a lower tone region. Fig. 26 illustrates a relationship between the DC unbalance quantity and the tone of a displayed image. Fig. 26 is similar to the view illustrated in Fig. 59. More specifically, there is a greater DC unbalance quantity at a region having a lower tone while there is a smaller DC unbalance quantity at a region having a higher tone.

Namely, it can be seen, from Fig. 26, that the DC unbalance quantity is significantly increased at the region of the black image (the left of the boundary line A) in the flag checker image 3. A greater DC unbalance quantity exerts greater influences on the afterimage phenomenon and, therefore, it is necessary to reduce the DC unbalance quantity, in order to alleviate the afterimage phenomenon. Therefore, in this embodiment, offsets are applied to lower tone regions such as the black image illustrated in Fig. 24A, in order to express a to-be-displayed image without using regions having greater DC unbalance quantities as illustrated in Fig. 26, for reducing afterimages.

In this embodiment, a process for applying an offset is executed with the γ conversion circuit 110 as a γ conversion unit, the γ conversion table 111 and the γ conversion table selection means 112. More specifically, the process for applying an offset is performed as follows. The γ conversion table selection means 112 selects a proper γ conversion table 111, and the γ conversion circuit 110 performs a γ conversion on the basis of the selected γ conversion table 111. Fig. 27 illustrates a γ curve representing a relationship between the input tone and the output tone. Fig. 27 illustrates a γ curve 43 to which no offset is applied and a γ curve 42 to which an offset is applied. Since an offset has been applied to the γ curve 42, the input tones are converted with the γ curve 42 such that input lower tones are output as tones incremented by an offset quantity 41. The intercept of the γ curve 24 with respect to the output tone corresponds to the offset quantity 41.

In this embodiment, the γ conversion table selection means 112 can select a γ conversion table 111 representing the γ curve 42 for applying an offset to a to-be-displayed image. In this case, there is the possibility of side effects such as black floating and degradations of qualities of natural images containing middle tone colors, due to the moderation of the inclination of the γ curve at the middle tone region in the vicinity of the lower tone region.

In the display device according to this embodiment, in order to alleviate such side effects, the following processes are performed. To cope with black floating in the lower tone region, when the γ conversion table 111 representing the γ curve 42 including an offset is selected, the microcomputer 115 controls the backlight control circuit 121 for reducing the brightness of the backlight 123. Accordingly, with the display device according to this embodiment, it is possible to suppress the black floating in the lower tone region.

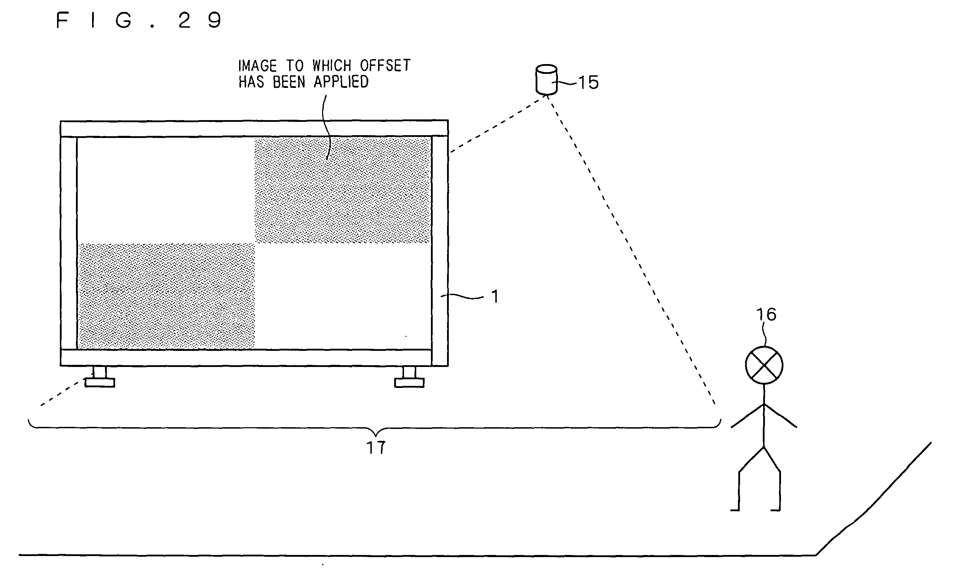

Also, to cope with degradations of qualities of natural images containing middle tone colors and the like, the inclination of the γ curve 42 including an offset is corrected, at the middle tone region in the vicinity of the lower tone region. More specifically, since the γ curve 42 has been upwardly shifted by the offset quantity at the lower tone region, the inclination of the curve is reduced at the middle tone region in the vicinity of the lower tone region and, therefore, the inclination of the curve is corrected in such a direction that the inclination reduction can be cancelled. Fig. 28 illustrates a corrected γ curve 44 which is a γ curve resulted from the correction. The corrected γ curve 44 of Fig. 28 has an increased inclination at the middle tone region 45. Accordingly, with the display device according to this embodiment, it is possible to alleviate degradations of the image qualities of natural images containing middle tone colors and the like.

On the other hand, the γ conversion table selection means 112 selects a γ conversion table 111, on the basis of information about the tones of a to-be-displayed image which are detected by the image signal level detection circuit 124. More specifically, the image signal level detection circuit 124 detects whether or not the input to-be-displayed image includes a lower tone region. When it includes a lower tone region, the γ conversion table selection means 112 selects a γ conversion table 111 representing the γ curve 42 illustrated in Fig. 27 or the corrected γ curve 44 illustrated in Fig. 28. On the contrary, when the input to-be-displayed image does not include a lower tone region, the γ conversion table selection means 112 selects a γ conversion table 111 representing the γ curve 43 illustrated in Fig. 27.

As described above, with the display device according to this embodiment, when a to-be-displayed image includes a lower-tone image, an offset is applied thereto for suppressing the occurrence of afterimages due to the lower-tone image in the displayed image. Further, with the display device according to this embodiment, the brightness of the backlight 123 can be controlled to alleviate the black floating at lower tone regions due to the application of the offset. Further, with the display device according to this embodiment, a γ conversion table 111 representing the corrected γ curve 44 can be selected to suppress the degradation of the qualities of images containing middle-tone colors due to the application of the offset. Further, the display device according to this embodiment selects a process for applying an offset or no offset, depending on whether or not the to-be-displayed image contains a lower tone region, which can reduce image quality degradations while alleviating afterimages caused by lower-tone images in the to-be-displayed image and boundary afterimages generated at boundary regions.

### Eighth Embodiment

A display device according to this embodiment is configured by providing a human detection sensor in the display device according to the seventh embodiment. Fig. 29 illustrates a display device 1 including a human detection sensor 15. The human detection sensor 15 illustrated in Fig. 29 detects whether or not a person 16 exists in a human detection sensor operating region 17 around the display device 1. Further, the human detection sensor 15 is connected to the human detection sensor signal interface 118 of the display device 1 in either a wired manner or a wireless manner.

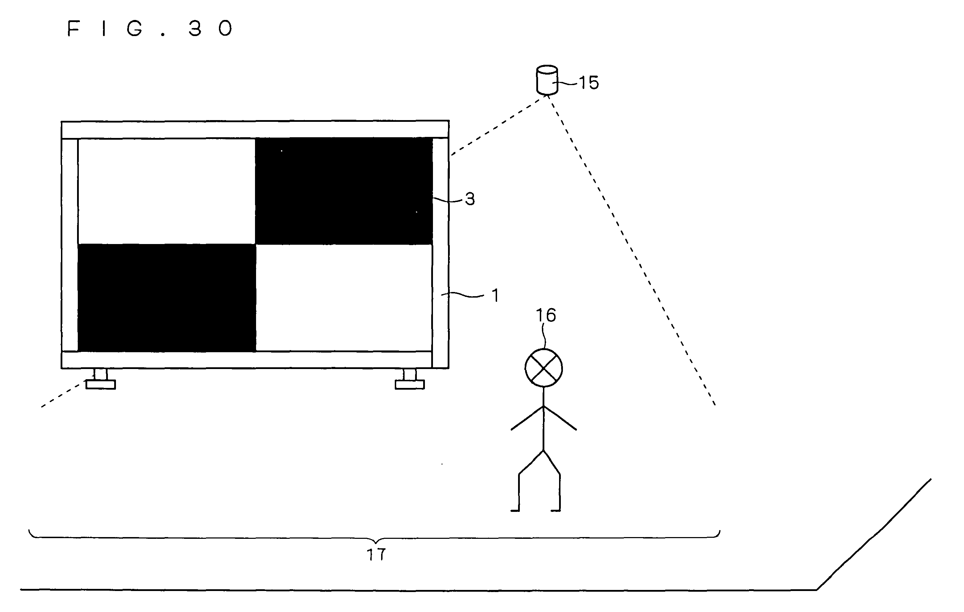

In the event that a person 16 enters the human detection sensor operating region 17 as in Fig. 30, the human detection sensor 15 sends a human detection sensor signal to the human detection sensor signal interface 118. On the basis of the human detection sensor signal, the display device 1 terminates the process for, for example, applying an offset to the to-be-displayed image. On the contrary, when no person 16 exists in the human detection sensor operating region 17, the display device 1 executes the process for, for example, applying an offset to the to-be-displayed image including a lower-tone image.

As described above, with the display device according to this embodiment, when a person 16 watching the display device 1 does not exist in a predetermined region around the display device 1, the γ conversion portion applies an offset to the to-be-displayed image, thereby alleviating afterimages due to lower-tone images in the displayed image. Further, when a person 16 watching the display device 1 exists in a predetermined region around the display device 1, the display device according to this embodiment terminates the application of an offset to the to-be-displayed image, thereby reducing the unviewability of the image due to the application of the offset.

### Ninth Embodiment

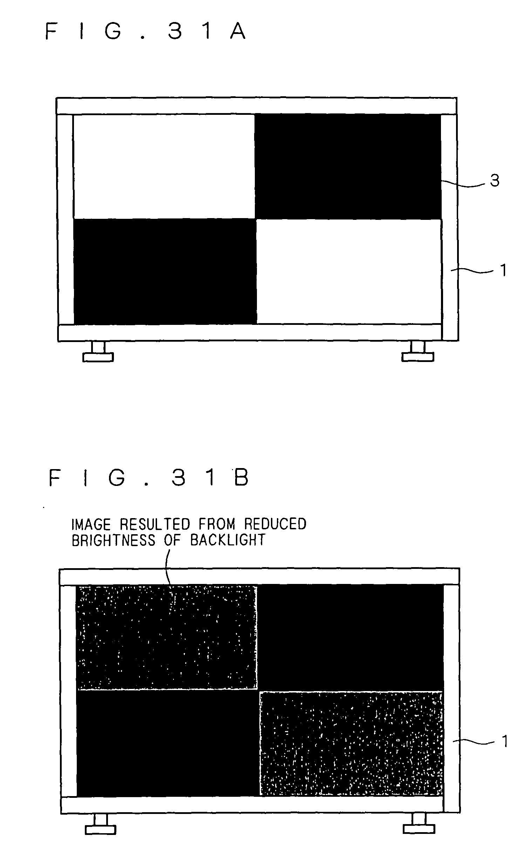

In this embodiment, there will be described a process which is different from the processes for reducing the afterimage phenomenon described in the first to eighth embodiments. Fig. 31A illustrates a display device displaying a flag checker image 3. In the display device according to this embodiment, in the case where a still image as in Fig. 31A is displayed for a long time, the microcomputer 115 executes a process for controlling the backlight control circuit 121 for reducing the brightness of the backlight 123. Fig. 31B illustrates the display device 1 displaying the flag checker image 3, in the case where the brightness of the backlight 123 is reduced.

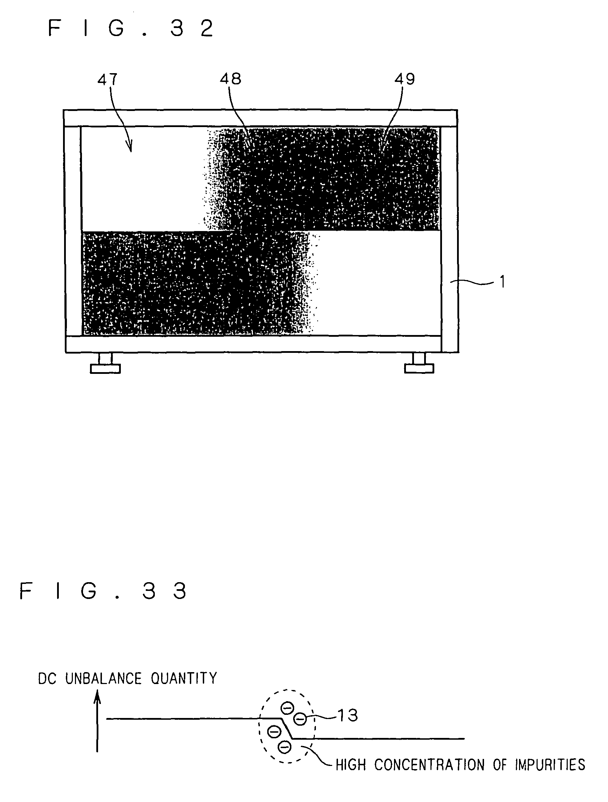

It can be seen, from Fig. 31B, that the region of the white image in the flag checker image 3 is changed due to the reduction of the brightness of the backlight 123. Fig. 32 illustrates a display in the case where a gray single-colored image is displayed over the entire screen, after the image of Fig. 31B is displayed for a long time. Further, in the display of Fig. 32, due to the reduction of the brightness of the backlight 123, the plain afterimage 47 caused by the white image of the flag checker image 3, the boundary afterimage 48 caused by the boundary region and the plain afterimage 49 caused by the black image of the flag checker image 3 are alleviated, in comparison with the afterimages 205, 206 and 207 illustrated in Fig. 55.

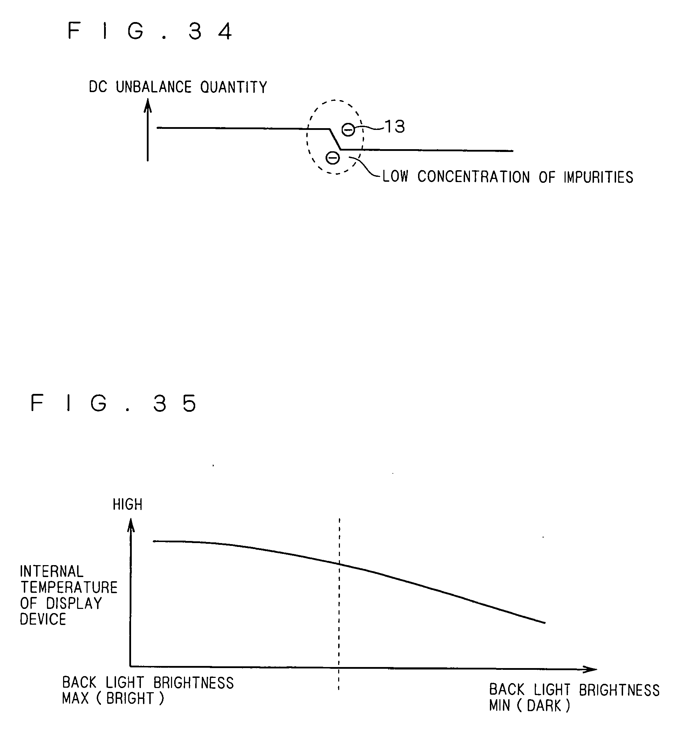

Next, there will be described a mechanism for alleviating the afterimage phenomenon by reducing the brightness of the backlight 123. Fig. 33 illustrates a state of the concentration of charged ions 13 within the display device in a high temperature environment. On the other hand, Fig. 34 illustrates a state of the concentration of charged ions 13 within the display device in a low temperature environment. As can be seen from the comparison between Fig. 33 and Fig. 34, when there is a constant DC unbalance quantity within the display device, the concentration of charged ions 13 is facilitated in a higher temperature environment, in comparison with a lower temperature environment. Namely, when the temperature of the display device is reduced, the concentration of charged ions 13 is reduced, thereby reducing the afterimage phenomenon.

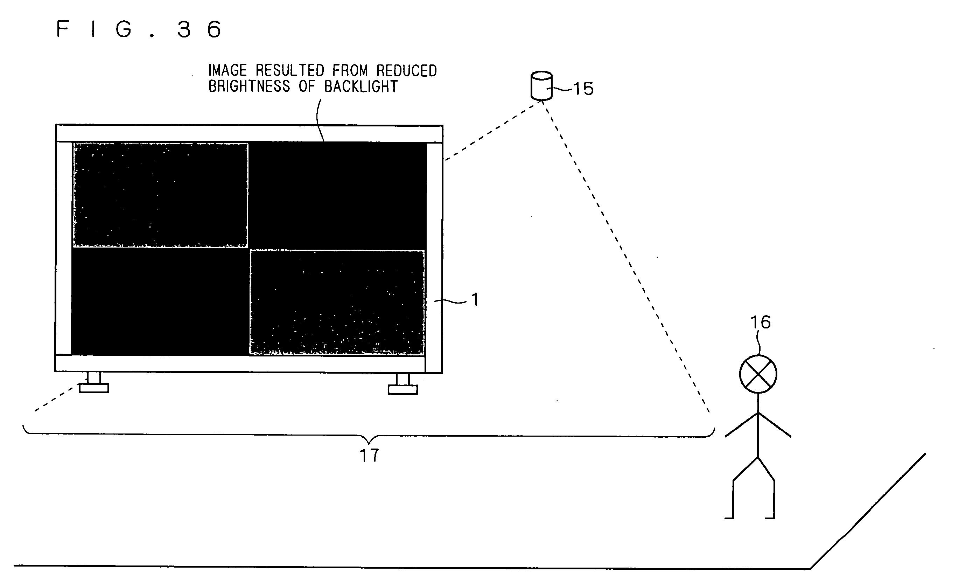

In the case of a non-self-luminous display device such as a liquid crystal display device, the temperature of the display device is significantly affected by the heat generation from the light source. Further, there is a correlation between the heat generation of the light source and the brightness of the light source. Therefore, there is a correlation between the brightness of the backlight 123 and the internal temperature of the display device 1, as illustrated in Fig. 35. Namely, the internal temperature of the display device 1 is increased with increasing brightness of the backlight 123 while the internal temperature of the display device 1 is decreased with decreasing brightness of the backlight 123.

The display device according to this embodiment utilizes the aforementioned characteristic and reduces the brightness of the backlight 123 in the case of displaying a still image such as the flag checker image 3, for alleviating the afterimage phenomenon. Further, the determination as to whether the to-be-displayed image is a still image or a moving image is performed by the image movement detection circuit 104. Further, in the display device according to the present invention, the internal temperature of the display device 1 can be forcibly reduced by operating the cooling fan 127. Also, the light source of the backlight 123 can be replaced with a light source having a lower heat generation, in order to effectively alleviate the afterimage phenomenon.

As described above, when detecting a still image, the display device according to this embodiment reduces the brightness of the backlight 123 to decrease the internal temperature of the display device, thereby alleviating afterimages.

### Tenth Embodiment

A display device according to this embodiment is configured by providing a human detection sensor in the display device according to the ninth embodiment. Fig. 36 illustrates a display device 1 including a human detection sensor 15. The human detection sensor 15 illustrated in Fig. 36 detects whether or not a person 16 exists in a human detection sensor operating region 17 around the display device 1. Further, the human detection sensor 15 is connected to the human detection sensor signal interface 118 of the display device 1 in either a wired manner or a wireless manner.

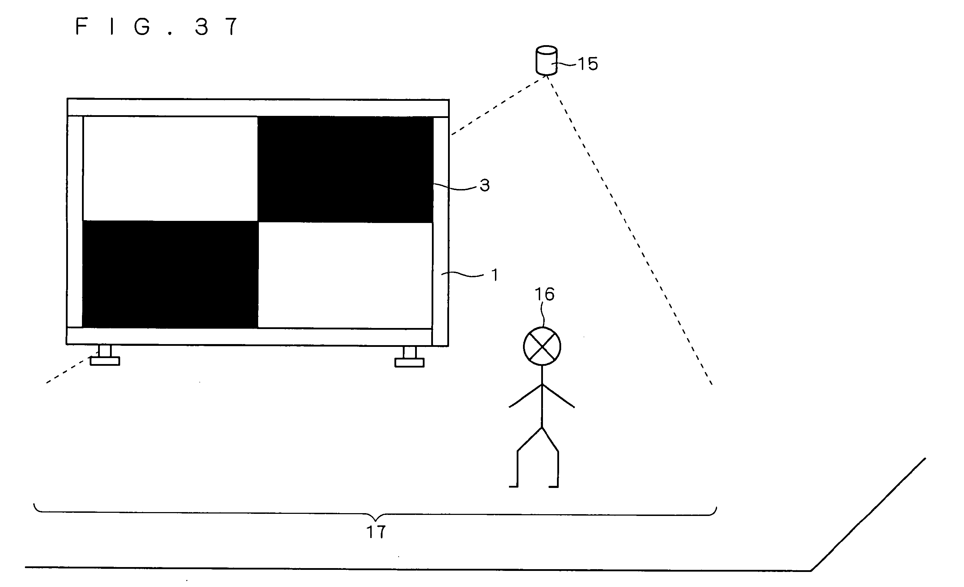

In the event that a person 16 enters the human detection sensor operating region 17 as in Fig. 37, the human detection sensor 15 sends a human detection sensor signal to the human detection sensor signal interface 118. On the basis of the human detection sensor signal, the display device 1 executes a process for restoring the brightness of the backlight 123 to a normal brightness. On the contrary, when no person 16 exists in the human detection sensor operating region 17, the display device 1 executes a process for reducing the brightness of the backlight 123 to below the normal brightness, in the case where the to-be-displayed image is a still image.

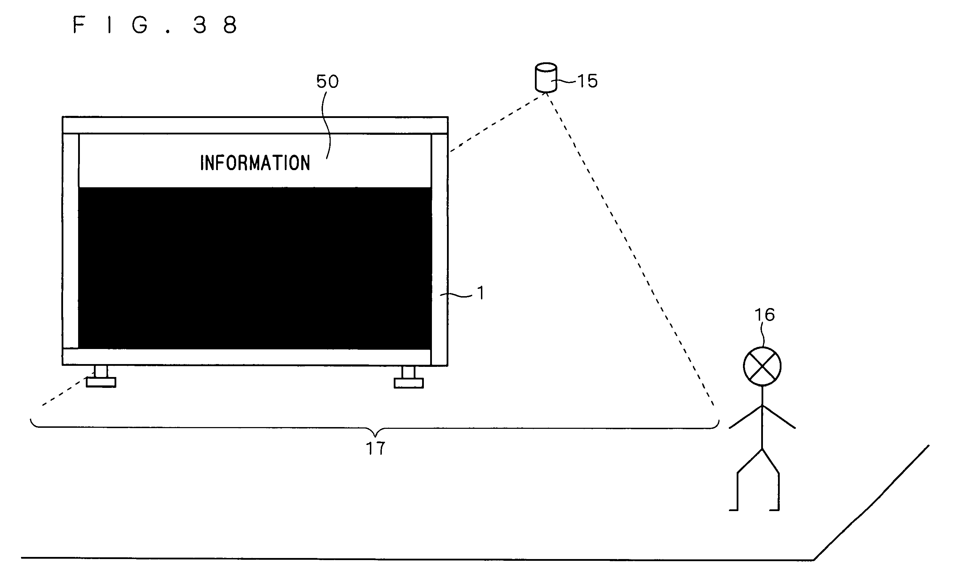

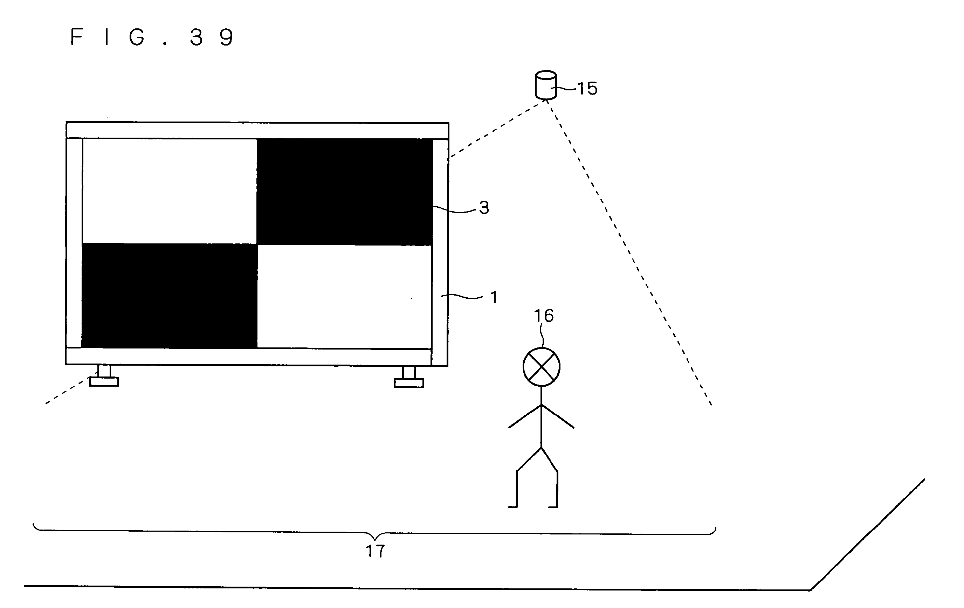

Further, as illustrated in Fig. 38, when a person 16 exists outside the human detection sensor operating region 17, the display device 1 displays a partial image 50 in the display region 2. On the other hand, as illustrated in Fig. 39, when a person 16 exists within the human detection sensor operating region 17, the display device 1 displays the entire image over the display region 2 (the flag checker image 3 in Fig. 39).

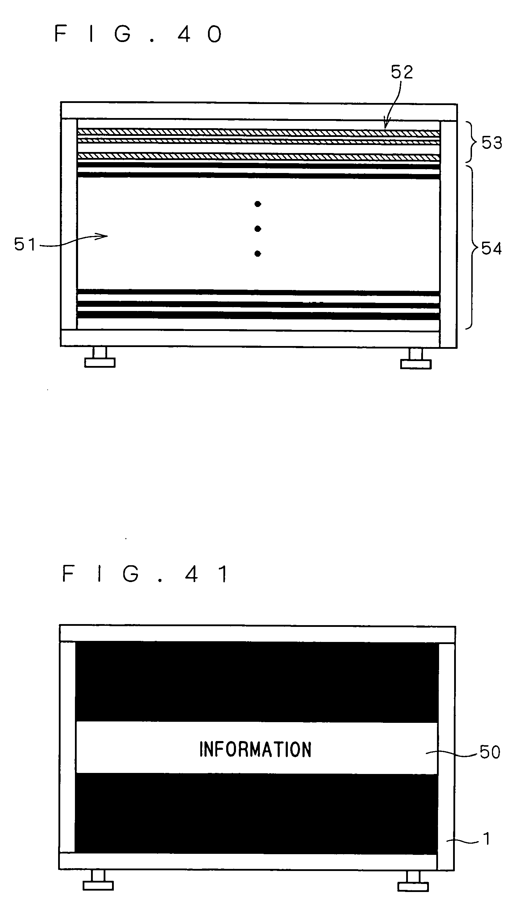

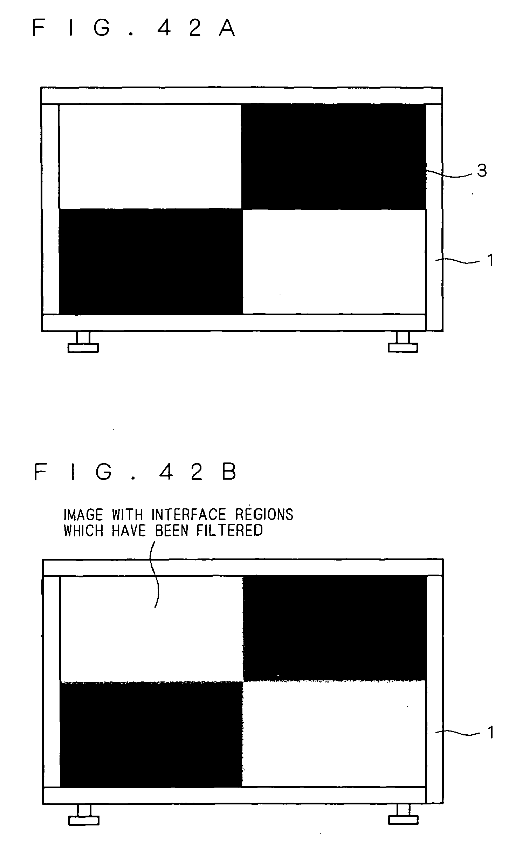

In order to display a partial image 50 as in Fig. 38, it is necessary to provide plural lamps (CCFL) 52 in the lamp house 51 to enable dividing the display region 2 into plural regions and controlling the lighting/not-lighting of the respective regions (Fig. 40). Further, on the basis of a to-be-displayed image input to the image signal level detection circuit 124, the microcomputer 115 controls the backlight control circuit 121 to set the region 53 in which the lamps 52 are on and the region 54 in which the lamps 52 are off. Also, it is possible to control, through the backlight control circuit 121, the region 53 over which the lamps 52 are on, such that the partial image 50 as in Fig. 41 is moved at optional time intervals.

As described above, with the display device according to this embodiment, when a person 16 watching the display device 1 does not exist in a predetermined region around the display device 1, the backlight control circuit 121 reduces the brightness of the backlight 123, thereby reducing afterimages generated in the displayed image. Further, when a person 16 watching the display device 1 exists in the predetermined region around the display device 1, the display device according to this embodiment executes a process for restoring the brightness of the backlight 123 to a normal brightness, thereby reducing the unviewability of images due to the reduction of the brightness of the backlight 123.

### Eleventh Embodiment

In this embodiment, there will be described a process which is different from the process for reducing the afterimage phenomenon described in the first to tenth embodiments. Fig. 42A illustrates a display device 1 displaying a flag checker image 3. The display device according to this embodiment changes, in a stepwise manner, the tone difference at a boundary region between a white image and a black image to alleviate the afterimage phenomenon at this region, in the case of displaying a still image as in Fig. 42A for a long time. Fig. 42B illustrates the display device 1 displaying the flag checker image 3, wherein the tone difference at the boundary region between the white image and the black image has been filtered to be changed in a stepwise manner.

The changing the tone difference at a boundary region in a stepwise manner means, for example, changing the tones of the four pixels before and after the boundary region in steps of 32 tones, wherein there has been the tone change from 0 tone to 255 tone between adjacent pixels at the boundary region between the white image and the black image.

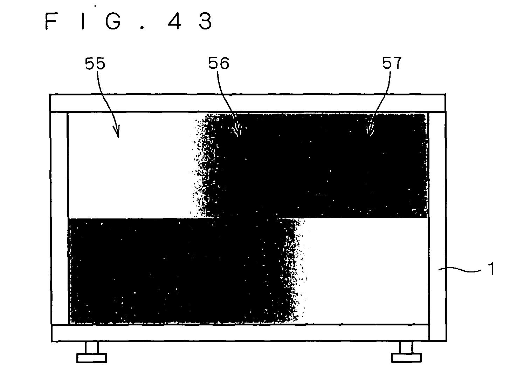

Fig. 42B expressly illustrates a state of the stepwise change of the tone difference at the boundary region between the white image and the black image. Fig. 43 illustrates a gray single-colored image being displayed over the entire screen after the image of Fig. 42B has been displayed for a long time. In Fig. 43, there is displayed a boundary afterimage 56 caused by the influence of the flag checker image 3, and the boundary afterimage 56 has been alleviated in comparison with the boundary afterimage 207 illustrated in Fig. 55, since the tone difference at the boundary region has been filtered.

As illustrated in Fig. 42B, a low pass filter is applied, in both the horizontal and vertical directions, to the boundary region between the white image and the black image of the flag checker image 3 through the band variable filter 114 and, thus, the tone change from white to black or black to white is moderated. Further, the band variable filter 114 is applied to only boundary regions having tone differences greater than a predetermined tone difference and such boundary regions are detected by the image signal level detection circuit 124. Further, the tone differences at the boundary regions are changed in a stepwise manner to below the predetermined tone difference.

As described above, the display device according to this embodiment changes, in a stepwise manner, through the band variable filter 114, the tones of boundary regions having tone differences greater than a predetermined tone difference, to below the predetermined tone difference, thereby alleviating the boundary afterimages at the boundary regions.

### Twelfth Embodiment

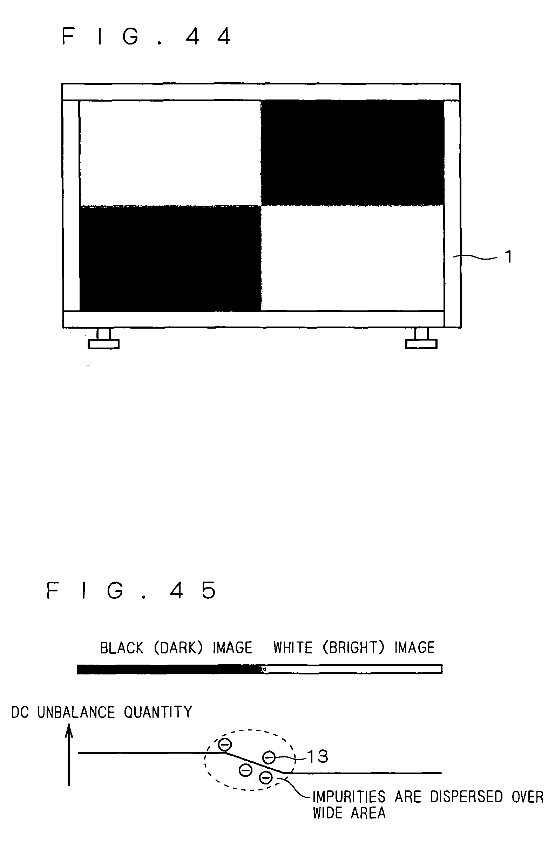

Fig. 44 illustrates a display device displaying a flag checker image, wherein the boundary regions of the flag checker image have been subjected to the band variable filter 114. In the flag checker image, the white image and the black image have a high contrast. Further, in the flag checker image, the white and black images constituting the high contrast have great areas. In this case, there is a steep change in the DC unbalance quantity difference at the boundary region between the white image and the black image, which causes an electric field at this region, thereby resulting in a concentration of charged ions 13.

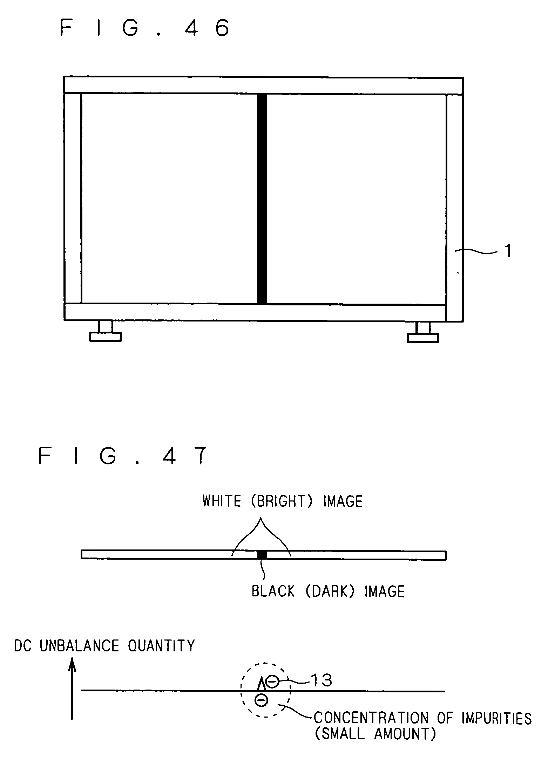

In the display device according to this embodiment, the band variable filter 114 is applied to the boundary region between the white image and the black image to change the tone of the boundary region in a stepwise manner, thereby moderating the change of the DC unbalance quantity difference, as illustrated in Fig. 44. Further, in the case where the displayed image has a contrast (tone difference) greater than a predetermine value, and the images constituting the contrast have areas greater than a predetermined area as in Fig. 44, the display device according to the present invention increase the ratio of the stepwise change of the tone difference. As illustrated in Fig. 45, the tone difference at the boundary region between the white image and the black image is changed in a stepwise manner to moderate the change of the DC unbalance quantity difference. By moderating the change of the DC unbalance quantity difference as in Fig. 45, the electric field generated at the region is reduced, thus reducing the concentration of charged ions 13.

Increasing the ratio of the stepwise change of the tone difference at a boundary region means, for example, changing the tones of the eight pixels before and after the boundary region (a total of 16 pixels) in steps of 16 tones, instead of changing the tones of the four pixels before and after the boundary region (a total of 8 pixels) in steps of 32 tones.

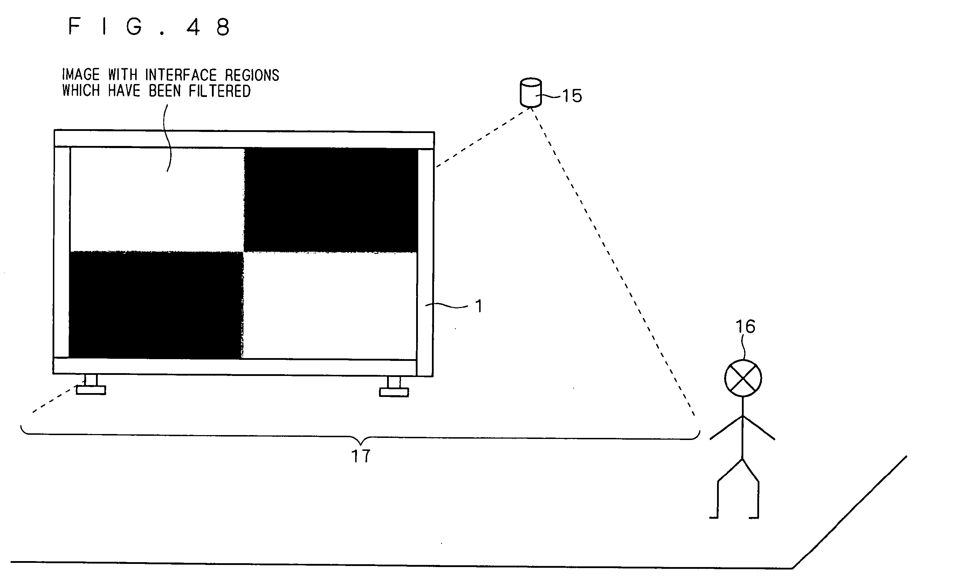

On the other hand, when a band-shaped black image is displayed substantially at the center portion of a white image as illustrated in Fig. 46, the displayed image has a contrast greater than the predetermined value, similarly to in Fig. 44. However, the black image constituting the contrast has an area smaller than the predetermined area. This causes a local change in the DC unbalance quantity difference in the boundary region between the white and black images, as illustrated in Fig. 47. Such a local change of the DC unbalance quantity difference induces a relatively small electric field at the boundary region, thereby resulting in a small concentration of charged ions 13. Accordingly, when images constituting the contrast of a displayed image have areas equal to or less than a predetermined area as illustrated in Fig. 46, the display device according to this embodiment reduces the ratio of the stepwise change of the tone difference.

Further, in the display device according to this embodiment, similarly, the image signal level detection circuit 124 detects the contrast of a displayed image and the areas of images constituting the contrast.

As described above, the display device according to this embodiment controls the ratio of the stepwise change of the tone difference at a boundary region (the amount of filtering), at the band variable filter 114, on the basis of the contrast of the displayed image and the areas of images constituting the contrast. This can reduce the unviewability of the image due to the application of the filtering and also can reduce the boundary afterimages at the boundary region.

### Thirteenth Embodiment

A display device according to this embodiment is configured by providing a human detection sensor in the display device according to the eleventh or twelfth embodiment. Fig. 48 illustrates a display device 1 including a human detection sensor 15. The human detection sensor 15 illustrated in Fig. 48 detects whether or not a person 16 exists in a human detection sensor operating region 17 around the display device 1. Further, the human detection sensor 15 is connected to a human detection sensor signal interface 118 of the display device 1 in either a wired manner or a wireless manner.

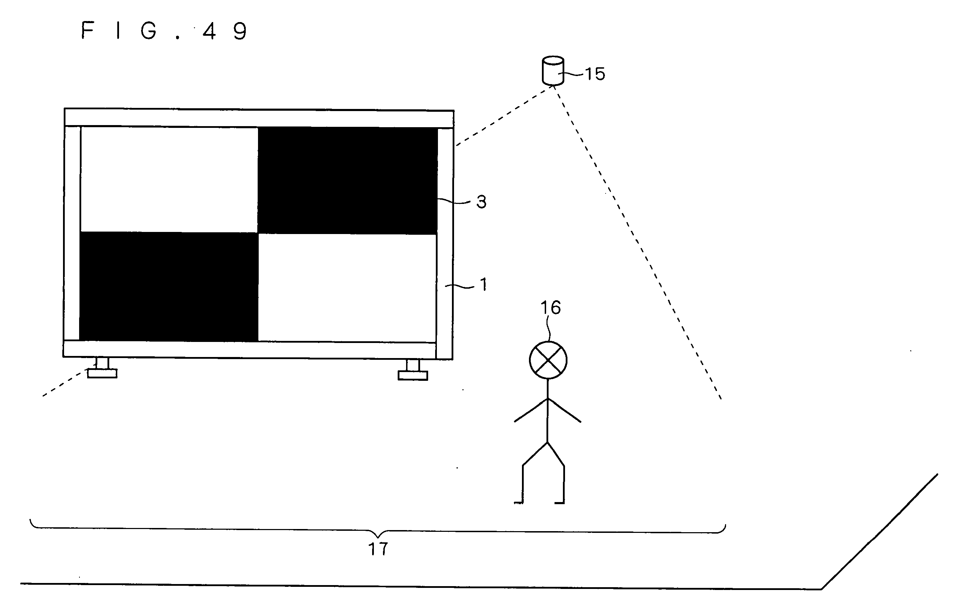

In the event that a person 16 enters the human detection sensor operating region 17 as in Fig. 49, the human detection sensor 15 sends a human detection sensor signal to the human detection sensor signal interface 118. On the basis of the human detection sensor signal, the display device 1 terminates the application of the band variable filter 114 to boundary regions having tone differences equal to or greater than the predetermined tone difference. On the contrary, when no person 16 exists in the human detection sensor operating region 17, the display device 1 applies the band variable filter 114 to boundary regions having tone differences equal to or greater than the predetermined tone difference, thereby changing the tone differences in a stepwise manner.

As described above, with the display device according to this embodiment, when a person 16 watching the display device 1 does not exist in a predetermined region around the display device 1, the band variable filter 114 changes, in a stepwise manner, the tone differences of boundary regions having tone differences equal to or higher than the predetermined tone difference, thereby reducing boundary afterimages caused by the boundary regions in the displayed image. Further, when a person 16 watching the display device 1 exists in a predetermined region around the display device 1, the display device according to this embodiment terminates the application of the band variable filter 114, thereby eliminating the unviewability of images due to the filtering.

### Fourteenth Embodiment

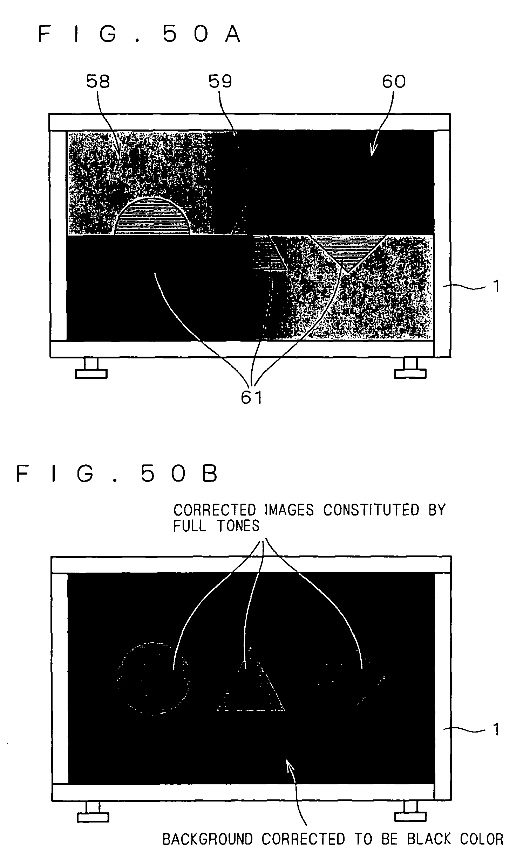

In this embodiment, there will be described a process which is different from the processes for reducing the afterimage phenomenon described in the first to thirteenth embodiments. Fig. 50A, which is the same view as Fig. 56, illustrates an image 61 constituted by middle tone colors as in Fig. 54 which is being displayed on a back ground of a gray single-colored image, after the flag checker image 3 has been displayed for a long time. In Fig. 50A, there are displayed, as afterimages, a plain afterimage 58 caused by the white image of the flag checker image 3, a plain afterimage 60 caused by the black image of the flag checker image 3 and an boundary afterimage 59 caused by the boundary between the white image and the black image of the flag checker image 3.

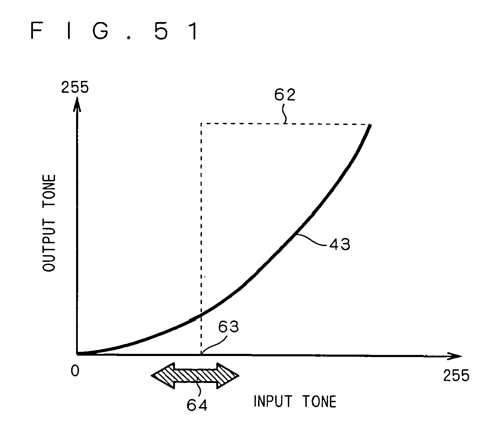

Fig. 50B illustrates a display resulted from changing the number of tones of the displayed image such that the afterimages are reduced by the γ conversion circuit 110 and the like. In Fig. 50B, the background region including the plain afterimage 58 caused by the white image, the plain afterimage 60 caused by the black image and the boundary afterimage 59 caused by the boundary is all converted into a black tone (0 tone) while the image 61 constituted by middle-tone colors is converted into an image constituted by the maximum (full) tones (255 tones) of the respective colors. Namely, the display device according to this embodiment performs a γ conversion with a γ curve 62, instead of the γ conversion with the γ curve 43 illustrated in Fig. 51.

By employing the γ curve 62 instead of the γ curve 43, input tones which do not exceed an operating point 63 are output as 0 tones while input tones exceeding the operating point 63 are output as 255 tones. Namely, by the use of the γ curve 62, the number of tones of the displayed image is adjusted. The γ curve 62 changes a displayed image having 256 tones to a displayed image having two tones. Further, the number of tones is changed as follows. The γ conversion table selection means 112 selects a γ conversion table 111 representing the γ curve 62 and the γ conversion circuit 110 performs conversion of image signals using the γ conversion table 111.

Further, in the display device according to this embodiment, it is necessary that an image 50 constituted by middle-tone colors as in Fig. 50 is made to have tones greater than the operating point illustrated in Fig. 51 while a gray single-colored image is made to have tones equal to or less than the operating point 63.

Therefore, in the display device according to this embodiment, the operating point 63 of the γ curve 62 is made variable depending on information about the tones of the to-be-displayed image. This is because it is necessary to set the operating point 63 at a tone smaller than the tones of the image 61 constituted by middle-tone colors. Fig. 51 illustrates the range over which the operating point 63 is variable. Further, information about the tones of the to-be-displayed image is detected by the image signal level detection circuit 124.

As described above, the display device according to this embodiment can change the number of tones of a to-be-displayed image for correcting the to-be-displayed image such that, even in the event of the occurrence of afterimages in the display device, the afterimages are invisible. Further, the display device according to this embodiment can optionally change the operating point 63 of the γ curve 62 on the basis of information about the tones of the to-be-displayed image, which can widen the available range over which the conversion with the γ curve 62 can be performed for various displayed images.

While the invention has been shown and described in detail, the foregoing description is in all aspects illustrative and not restrictive. It is therefore understood that numerous modifications and variations can be devised without departing from the scope of the invention.

## Claims

1. A non-self-luminous display device comprising:
an image changing unit (107, 108) which optionally changes the size of a displayed image; and
an image moving unit (105, 106) which moves the position of said displayed image which has been changed in size by said image changing unit (107, 108), on a display region, at predetermined time intervals.

2. The display device according to claim 1, wherein
said image changing unit (107, 108) increases the size of said displayed image such that said displayed image is displayed on any portion of said display region, even when said image moving unit (105, 106) moves the position of said displayed image.

3. The display device according to claim 1, further comprising:
an image generation/insertion unit (125, 126) which generates a background image to be displayed on said display region which does not display said displayed image and inserts the background image to said display region, when said image changing unit (107, 108) reduces the size of said displayed image to a size smaller than said display region and said image moving unit (105, 106) moves the position of said changed displayed image.

4. The display device according to claim 1, further comprising:
an image generation/insertion unit (125, 126) which generates a background image to be displayed on said display region which does not display said displayed image and inserts the background image to said display region, when said image changing unit (107, 108) changes the size of said displayed image to a size equal to that of said display region and said image moving unit (105, 106) moves the position of said changed displayed image.

5. The display device according to claim 3 or 4, wherein
said image generation/insertion unit (125, 126) generates said background image, on the basis of images in the vicinity of a boundary of said displayed image.

6. The display device according to any one of claims 1 to 4, wherein
said image moving unit (105, 106) records said position of said displayed image and determines the next direction of movement on the basis of said recorded position.

7. The display device according to any one of claims 1 to 4, further comprising:
an image movement detection unit (104) which determines whether or not said displayed image is a moving image or a still image, wherein
when said image movement detection unit (104) detects a still image for a predetermined time period, said image changing unit (107, 108) and said image moving unit (105, 106) perform a process on said displayed image.

8. The display device according to any one of claims 1 to 4, further comprising:
an image signal level detection unit (124) which detects the contrast of said displayed image, wherein
when said image signal level detection unit (124) determines that the contrast of said displayed image is higher than a predetermined value, said image changing unit (107, 108) and said image moving unit (105, 106) perform a process on said displayed image.

9. The display device according to claim 8, wherein
said image moving unit (105, 106) changes the amount of movement of said displayed image, on the basis of the contrast of said displayed image.

10. The display device according to claim 8, wherein
said image moving unit (105, 106) changes the amount of movement of said displayed image, on the basis of the areas of the images constituting the contrast of said displayed image higher than a predetermined value.

11. The display device according to any one of claims 1 to 4, further comprising:
a human detection sensor unit (15) which detects whether or not a person exists in a predetermined range in the vicinity of said display device, wherein
when said human detection sensor unit (15) detects said person, said image changing unit (107, 108) and said image moving unit (105, 106) terminates the process on said displayed image.

12. A large-sized display apparatus employing a plurality of the display devices according to any one of claims 1 to 4, wherein
said displayed images displayed on said display devices are synchronized, in terms of the direction and the amount of movement, among the plurality of said display devices.

13. The large-sized display apparatus according to claim 12, wherein
the synchronization of said displayed images in terms of said direction and said amount of movement is established through communication among the plurality of said display devices.

14. The large-sized display apparatus according to claim 12, wherein
the synchronization of said displayed images in terms of said direction and said amount of movement is established on the basis of synchronization signals supplied to said respective display devices from the outside.

15. The large-sized display apparatus according to claim 14, wherein
said synchronization signals are supplied along with image signals to said display devices.

16. A non-self-luminous display device comprising:
an image signal level detection unit (124) which detects whether or not a displayed image includes an image in a lower tone region lower than a predetermined tone; and
a γ conversion unit (110) which performs an offset process for changing, by a predetermined amount, the brightness of respective tones in said lower tone region, when said displayed image includes an image in said lower tone region.

17. The display device according to claim 16, further comprising:
a backlight control unit (121) which changes the brightness of backlight, on the basis of said offset process.

18. The display device according to claim 16 or 17, wherein
said γ conversion unit (110) corrects the inclination of a γ curve in a middle tone region in the vicinity of said lower tone region.

19. The display device according to claim 16, wherein
said γ conversion unit (110) does not perform said offset process, when said displayed image does not include an image in said lower tone region.

20. The display device according to any one of claims 16, 17 and 19, further comprising:
a human detection sensor unit (15) which detects whether or not a person exists in a predetermined range in the vicinity of said display device, wherein
when said human detection sensor unit (15) detects said person, said γ conversion unit (110) terminates said offset process.

21. A non-self-luminous display device comprising:
an image movement detection unit (104) which determines whether said displayed image is a moving image or a still image; and
a backlight control unit (121) which reduces the brightness of backlight to below a predetermined brightness, when said image movement detection unit (104) detects a still image for a predetermined time.

22. The display device according to claim 21, further comprising:
a human detection sensor unit (15) which detects whether or not a person exists in a predetermined range in the vicinity of said display device, wherein
when said human detection sensor unit (15) detects said person, said backlight control unit (121) restores the brightness of said backlight to said predetermined brightness.

23. A non-self-luminous display device comprising:
a human detection sensor unit (15) which detects whether or not a person exists in a predetermined range in the vicinity of said display device; and
a backlight control unit (121) which can partially control lighting/not-lighting of the brightness of the backlight, wherein
when said human detection sensor unit (15) does not detect said person, said backlight control unit (121) lights a portion of said backlight in order to display only the displayed image of a predetermined region, and
when said human detection sensor unit (15) detects said person, said backlight control unit (121) lights the entire surface of said backlight.

24. The display device according to claim 23, wherein
said backlight control unit (121) moves, with time, the portion of said backlight which is partially lit.

25. A non-self-luminous display device comprising:
an image signal level detection unit (124) which determines whether or not a displayed image includes a boundary region having a tone difference equal to or greater than a predetermined tone difference; and
a band variable filter unit (114) which changes, in a stepwise manner, the tone difference at said boundary region detected by said image signal level detection unit (124) to below said predetermined tone difference.

26. The display device according to claim 25, wherein
said image signal level detection unit (124) detects the areas of the images constituting said boundary region, and
said band variable filter unit (114) adjusts the amount of the stepwise change of the tone difference at said boundary region, on the basis of said areas.

27. The display device according to claim 25 or 26, further comprising:
a human detection sensor unit (15) which detects whether or not a person exists in a predetermined range in the vicinity of said display device, wherein
when said human detection sensor unit (15) detects said person, said band variable filter unit (114) terminates a process on said displayed image.

28. A non-self-luminous display device comprising:
a γ conversion unit (110) which can optionally change the number of tones of a displayed image, wherein
said γ conversion unit (110) changes the number of tones of said displayed image including an afterimage resulted from displaying said displayed image which is a still image for a long time.

29. The display device according to claim 28, further comprising:
an image signal level detection unit (124) which detects information about the tones of a displayed image, wherein
said γ conversion unit (110) changes an operating point for changing the number of the tones of said displayed image, on the basis of said tone information from said image signal level detection unit (124).
